# EUROPEAN PATENT APPLICATION

(11) **EP 1 610 357 A1**
(43) Date of publication of application: **28.12.2005**
(21) Application number: 04724778.8
(22) Date of filing: 31.03.2004
(51) Int. Cl.: H01J 29/86, C09J 179/08, C09J 201/00, C09K 3/10

(54) **VACUUM ENVELOPE FOR IMAGE DISPLAY AND SEALING MATERIAL FOR IMAGE DISPLAY**

(30) Priority: 31.03.2003 JP 2003094680
(71) Applicant: Mitsui Chemicals, Inc., Tokyo 105-7117 (JP); ASAHI GLASS COMPANY LTD., Tokyo 100-8405 (JP)
(72) Inventor: MIZUTA, Yasushi, c/o Mitsui Chemicals, Inc.,, Chiba 2990265 (JP); YAMAZAKI, Akihiro, c/o Mitsui Chemicals, Inc.,, Chiba 2990265 (JP); KUROKI, Yuichi, c/o Asahi Glass Company, Limited, Kanagagawa 2218755 (JP); SUGAWARA, Tsunehiko, c/o Asahi Glass Company, Ltd., Tokyo 1008405 (JP); ISHIZEKI, Kenji, c/o Asahi Glass Company, Limited, Kanagawa 2218755 (JP)
(74) Representative: Müller-Boré & Partner Patentanwälte
(86) International application number: PCT/JP2004/004631
(87) International publication number: WO 2004/088707

(57) **Abstract**

A lead-free organic sealant with which sealing can be carried out at a temperature lower than 400°C, and which is excellent in strength at high temperature. Specifically, an organic sealant for sealing envelope-constituting members to constitute a vacuum envelope for an image display device, wherein a fired body of the organic sealant has a minimum viscosity of at most 10³ Pa·s within a temperature range of at least 300°C and lower than 400°C, and the fired body of the organic sealant satisfies 0.99<m₄₀₀/m₂₀≦1.00, where m₂₀ is the mass at 20°C, and m₄₀₀ is the mass at 400°C.

## Description

### TECHNICAL FIELD

The present invention relates to an image display device to be used for a television-broadcasting receiver, a monitor equipment, etc. in a screen picture equipment, specifically, a cathode ray tube and an image display device having a field emission cold cathode, a vacuum envelope for an image display device and an organic sealant to be used for production thereof, and a method for sealing a vacuum envelope for an image display device using such an organic sealant.

### BACKGROUND ART

Usually, a cathode ray tube (CRT) and an image display device.having a field emission cold cathode (FED) (hereinafter they will be generically referred to as an image display device) comprise two or more members. Specifically, a CRT comprises an image display panel portion (glass panel portion) on which an image is produced and a glass funnel portion having an electron gun, and a FED typically comprises a front panel portion (image display panel portion), a rear panel portion having a cold cathode disposed to face the front panel portion, and an exterior frame present between the front panel portion and the rear panel portion and occluding the periphery. These image display devices are produced by sealing such members, to form a vacuum envelope.

Heretofore, the sealing is carried out by mixing frit glass with a vehicle to prepare a slurry, which is applied to edge surfaces and dried at a relatively low temperature and then fired at a higher temperature, or by mixing them to form a sheet, which is attached to edge surfaces and fired. As the frit glass, a PbO-B₂O₃-ZnO-SiO₂ type crystalline low melting solder glass having a high lead content has been used. An example wherein such a frit glass is used is disclosed in JP-A-52-124854.

The envelope after sealing is evacuated of air at a high temperature of from about 250 to about 380°C so that the interior thereof is in a high vacuum. In this occasion, a tensile stress resulting from the interior of the envelope being in a vacuum (hereinafter referred to as vacuum stress) and a tensile stress resulting from a difference between internal temperature and outer temperature (hereinafter referred to as thermal stress) are applied to the sealed portion, and accordingly strength resistant to such stresses is required.

Further, in order to secure long term reliability of the image display device, the sealed portion is required to have a compressive strength of at least 0.3 MPa and high airtightness and insulating characteristics.

In recent years, a CRT becomes large and flat, and accordingly a very small deformation of a built-in metal member such as a shadow mask causes displacement of an electron beam and impairs the image. Accordingly, heat deformation of a metal in a sealing step which had not been problematic before has attracted attention, and reduction of the sealing temperature has been desired. It has been found that such heat deformation is almost suppressed by decreasing the sealing temperature to lower than 400°C.

Further, in the case of a FED, a back substrate disposed in the vacuum envelope has a multilayer structure comprising a cathode electrode, a resister layer, an emitter, an insulating layer and the like, and it is desired to carry out a heat treatment at a temperature as low as possible, in view of a difference in thermal expansion characteristics among the respective layers. Further, depending upon the type of the emitter, the emitter may be oxidized at a sealing temperature higher than 400°C, thus deteriorating the electron emission characteristics.

Accordingly, a sealing material with which sealing can be carried out at a temperature lower than 400°C has been desired.

However, in sealing by using conventional frit glass, a firing temperature of at least 400°C is required, and if sealing is carried out at a firing temperature lower than 400°C, strength at the sealed portion is insufficient, and the sealed portion may be broken in the subsequent high temperature evacuation step, or long term reliability of the vacuum envelope may not be secured. Further, the conventional frit glass contains lead in an amount of 60 mass% or more as PbO, however, in view of influences over environment, the frit glass is required to be free from lead.

As a sealant with which sealing can be carried out at a temperature lower than 400°C and which contains no lead, an organic sealant such as an epoxy resin or a silicone resin may be considered. Examples wherein such an epoxy resin or the like is used are disclosed in JP-A-52-124854 and JP-A-4-245153. However, such conventional organic sealants have such drawbacks that (1) the adhesive strength with glass is insufficient, (2) strength is insufficient at a high temperature, (3) the sealant itself decomposes at the time of high temperature evacuation, generates a gas and impairs an electron gun or a cold cathode, and (4) the gas permeability is high, and no high vacuum can be maintained. As examples of other organic sealants, examples wherein an adhesive containing a polybenzimidazole resin, a polyimide resin or a polyphenyl compound is used are disclosed in JP-A-2000-21298, JP-A-2000-251768 and JP-A-2000-251769, and examples wherein a polyimide resin is used together with a molten liquid crystal polymer resin obtained by copolymerizing parahydroxybenzoic acid with e.g. terephthalic acid, a biphenol, 2,6-naphthalene dicarboxylic acid, hydroxynaphthoic acid or isophthalic acid in combination, or the melt liquid crystal polymer resin is used alone, are disclosed in JP-A-10-275573. However, these organic sealants do not overcome the above problems (1) to (4).

Further, lead-free inorganic sealing materials such as a bismuth type wherein a bismuth compound is used instead of lead and a phosphate type wherein a phosphate is used have also been proposed, but they have such drawbacks that (5) no sufficient strength can be secured, and (6) sealing at a temperature lower than 400°C can hardly be carried out.

### DISCLOSURE OF THE INVENTION

Under these circumstances, it is a first object of the present invention to provide a vacuum envelope for an image display device wherein a sealed portion has sufficient strength against a vacuum stress and a thermal stress generated in a process for producing an image display device, whereby the sealed portion will not be broken in the production process.

Such a vacuum envelope for an image display device is preferably such that a sealed portion has a sufficient dielectric breakdown strength and that the sealed portion is free from lead.

Further, it is a second object of the present invention to provide an organic sealant for an image display device, with which sealing can be carried out at a temperature lower than 400°C, and a fired body of which has a sufficient strength in a high temperature environment which it undergoes in a process for producing an image display device.

Such an organic sealant is preferably such that the fired body thereof does not substantially decompose in a high temperature environment which it undergoes in the process for producing an image display device, and thus it generates no cracked gas.

Further, such an organic sealant is preferably excellent in handling efficiency in a high temperature environment which it undergoes in the process for producing an image display device.

Further, it is a third object of the present invention to provide an image display device which is free from a problem of breakage of a sealed portion in a production process and which is excellent in display characteristics.

Still further, it is a fourth object of the present invention to provide a method for sealing a vacuum envelope for an image display device, with which operation is easy and with which a sealed portion will not be broken in a process.

The present invention has been made to achieve the above objects, and it provides a vacuum envelope for an image display device, having envelope-constituting members including at least an image display portion made of glass, sealed with a sealant layer, characterized in that the sealant layer comprises an organic sealant layer obtained by firing an organic sealant, and a sealed portion comprising the organic sealant layer and the envelope-constituting member sealed with the organic sealant layer, has a flexural strength of at least 30 MPa at 220°C.

In the envelope for an image display device, the sealed portion preferably has a dielectric breakdown strength of at least 3 kV/mm.

In a case where the image display device is a cathode ray tube, the sealed portion in the envelope for an image display device preferably has a dielectric breakdown strength of at least 15 kV/mm.

Further, in the vacuum envelope for an image display device, the organic sealant layer preferably contains substantially no lead.

Further, the present invention provides a sealant for an image display device, which is an organic sealant to seal envelope-constituting members to constitute a vacuum envelope for an image display device, characterized in that the organic sealant has a minimum viscosity of at most 10³ Pa·s within a temperature range of at least 300°C and lower than 400°C, and a fired body of the organic sealant satisfies 0.99<m₄₀₀/m₂₀≦1.00, where m₂₀ is the mass at 20°C, and m₄₀₀ is the mass at 400°C.

The sealant for an image display device is preferably such that a fired body of the organic sealant has a glass transition temperature of at least 175°C as measured by a differential scanning calorimeter (DSC).

The sealant for an image display device is preferably such that.the fired body of the organic sealant has a flexural modulus of at least 100 MPa at 220°C.

Further, the sealant for an image display device preferably contains a polyimide compound or a polyamic acid compound as the main component.

In the sealant for an image display device, the imide group content in the polyimide compound (molecular weight of imide groups/molecular weight of polyimide) or the amide group content in the polyamic acid compound (molecular weight of amide groups/molecular weight of polyamic acid) is preferably within a range of from 10 to 31%.

The sealant for an image display device preferably contains at least one of polyimide compounds having structures represented by the following Formulae 1 to 3, as the main component:

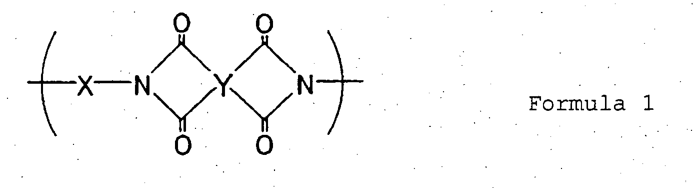

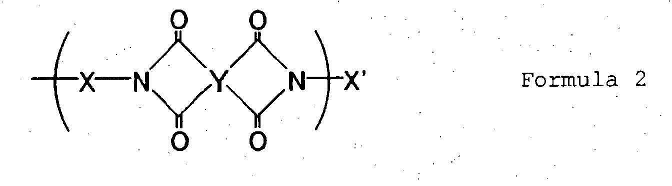

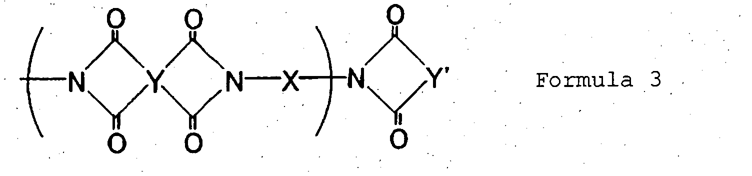

In the Formulae 1 to 3, X is the main skeleton of a diamine compound, X' is the main skeleton of a monoamine compound, Y is the main skeleton of a tetracarboxylic dianhydride, and Y' is the main skeleton of a dicarboxylic anhydride. X and Y more specifically have the following meanings.
(A) When X is any one of the following Formulae 4 to 8, Y is any one of the following Formulae 9 to 14. In the following Formulae 4 to 8, R each independently is any one selected from the group consisting of -, -O-, -CO-, -SO₂-, -S-, -CH₂- and -C (CH₃) ₂, n each independently is from 0 to 7, and Z each independently is CH₃ or a phenyl group.
(B) When X is the following Formula 15, Y is the following Formula 16 or 17. In the following Formula 15, R each independently is any one selected from the group consisting of -, -O-, -CO-, -SO₂-, -S-, -CH₂- and -C(CH₃)₂, n each independently is from 0 to 7, and Z each independently is CH₃ or a phenyl group:

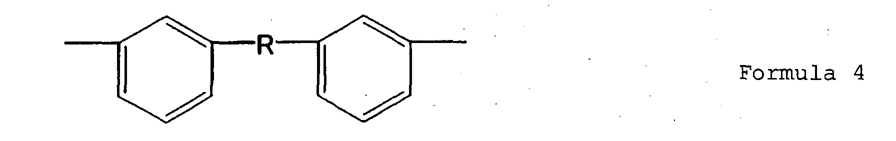

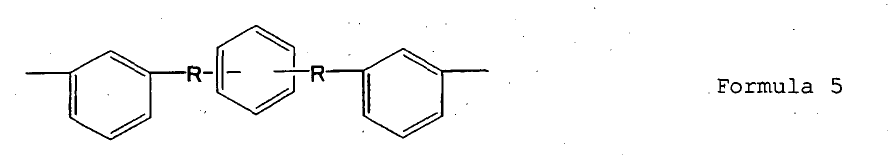

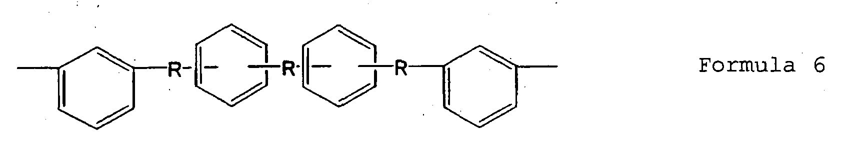

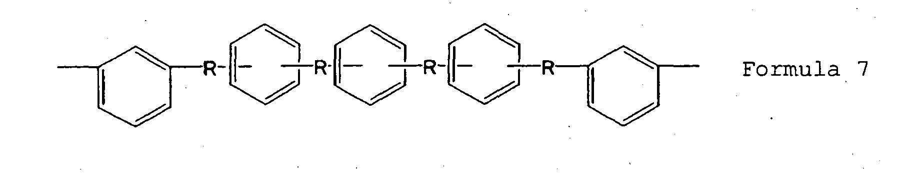

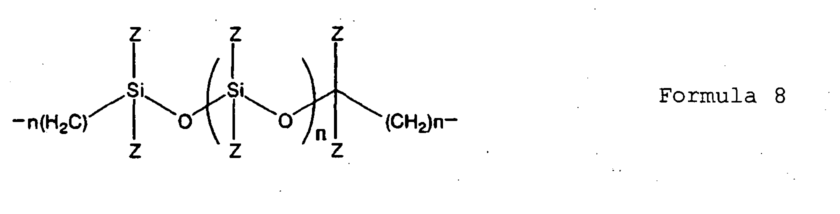

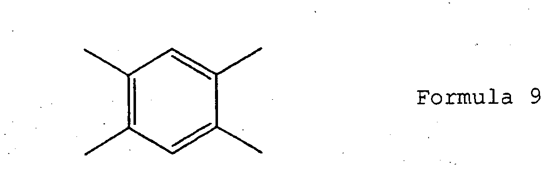

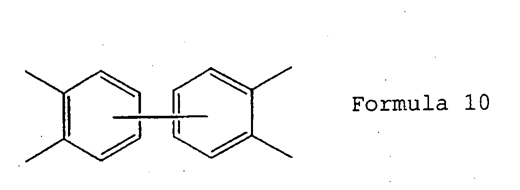

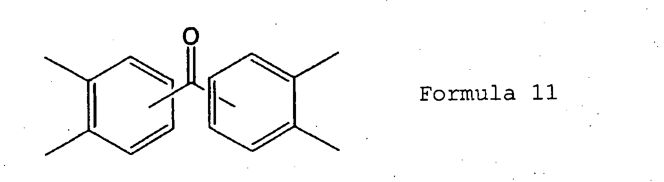

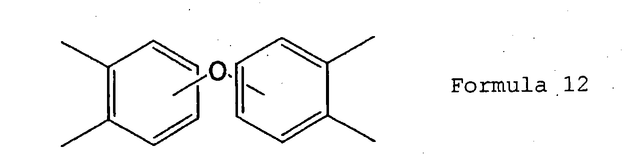

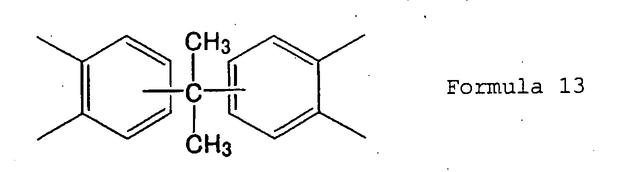

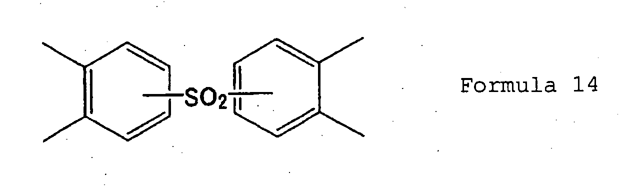

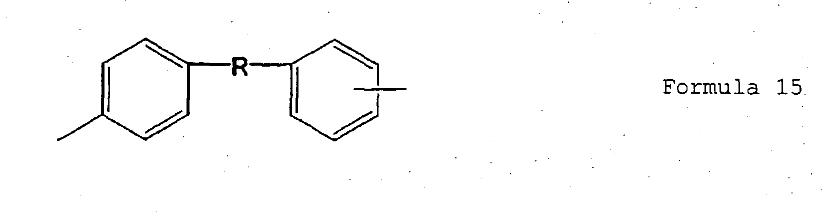

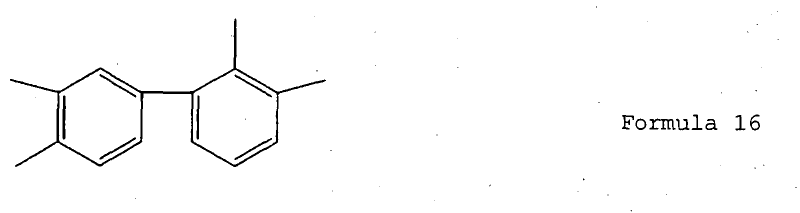

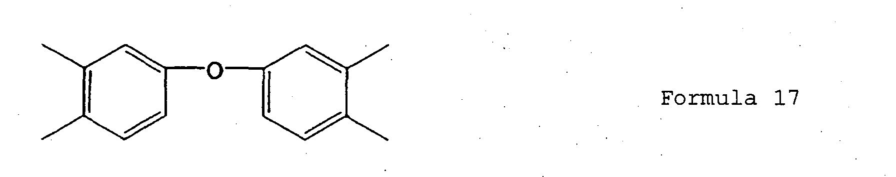

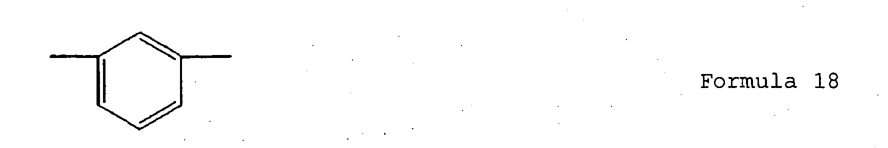

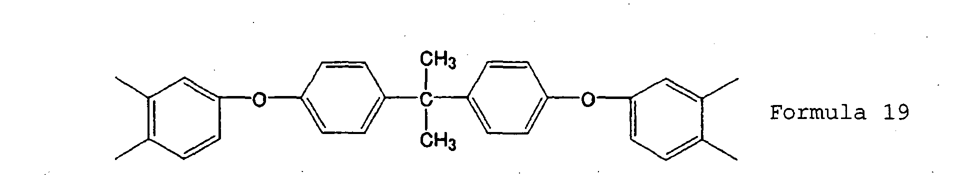

Further, the sealant for an image display device may preferably contains a polyamic acid compound having a structure represented by the following Formula 20 as the main component:

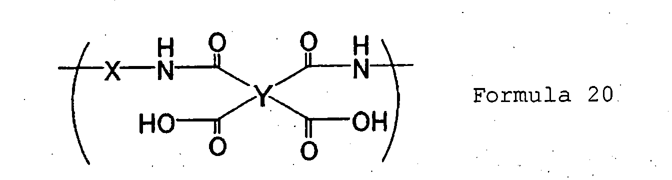

In the Formula 20, when X is any one selected from the group consisting of the following Formulae 4 to 8, Y is any one selected from the group consisting of the following Formulae 9 to 14;
when X is the following Formula 15, Y is the following Formula 16 or 17; and
when X is the following Formula 18, Y is the following Formula 19:

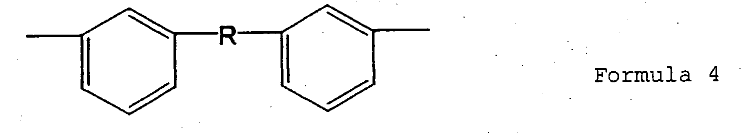

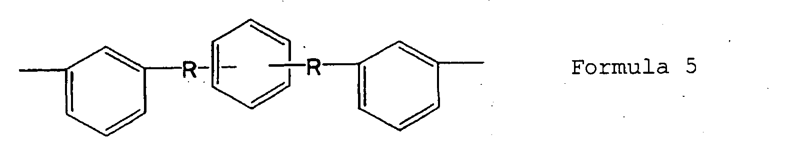

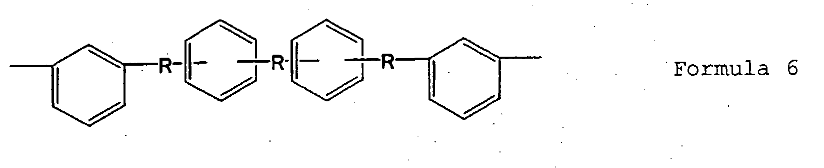

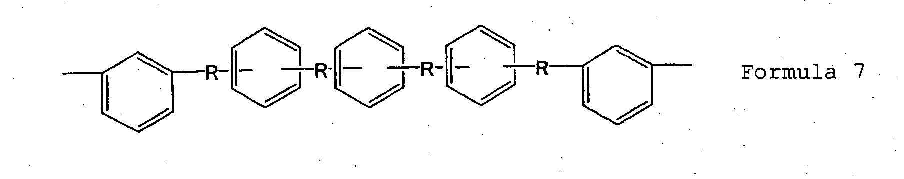

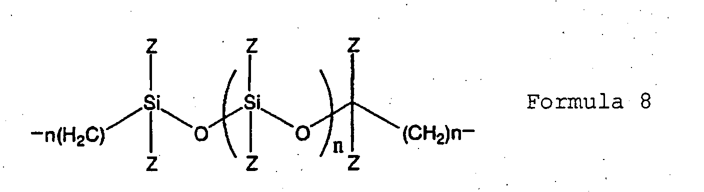

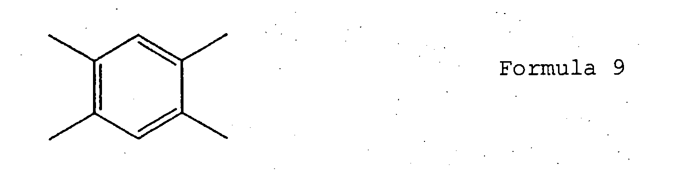

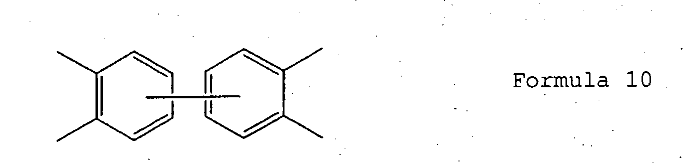

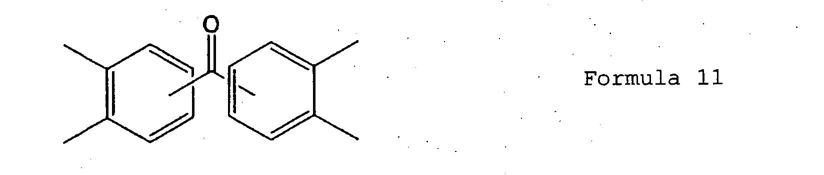

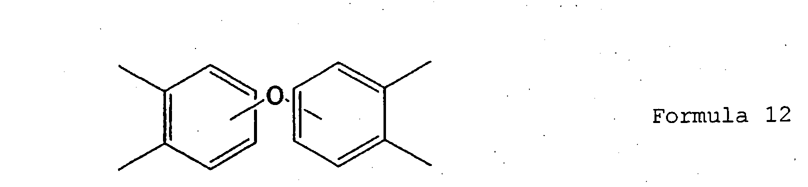

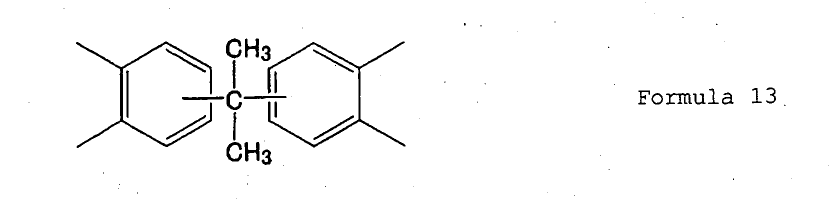

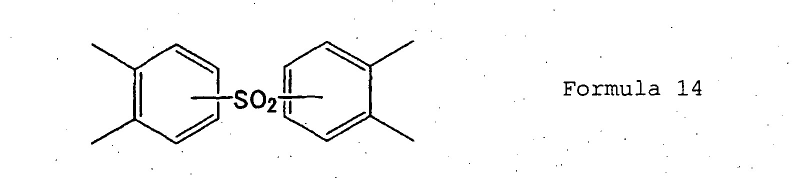

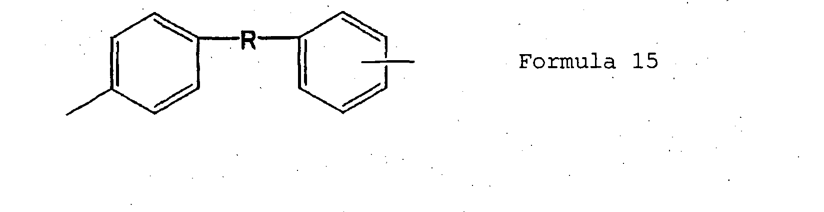

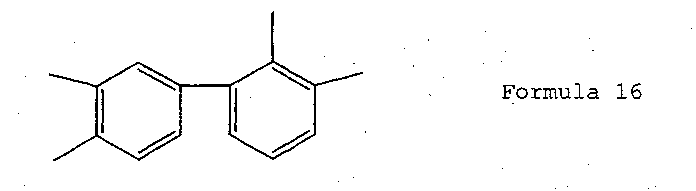

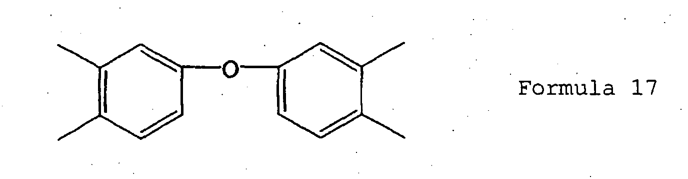

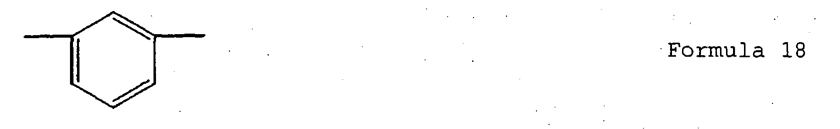

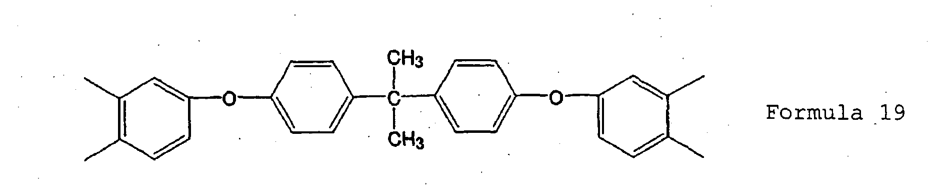

In the above Formulae, R each independently is any one selected from the group consisting of -, -O-, -CO-, -SO₂- -S-, -CH₂- and -C(CH₃)₂, n each independently is from 0 to 7, and Z each independently is CH₃ or a phenyl group.

Further, the present invention provides a vacuum envelope for an image display device, characterized in that envelope-constituting members are sealed with the above sealant for an image display device.

Further, the present invention provides an image display device provided with the above vacuum envelope for an image display device.

Still further, the present invention provides a method for sealing a vacuum envelope for an image display device, characterized by applying an organic sealant containing a polyimide compound or a polyamic acid compound as the main component, or its solution, to sealing surfaces of envelope-constituting members to constitute the vacuum envelope, followed by heating at a temperature within a range of at least 300°C and lower than 400°C, to fire and solidify the organic sealant thereby to seal the envelope-constituting members.

Further, the organic sealant preferably contains at least one of polyimide compounds having structures represented by the above Formulae 1 to 3 as the main component.

Still further, the organic sealant preferably contains a polyamic acid compound having a structure represented by the above Formula 20 as the main component.

In the vacuum envelope for an image display device of the present invention, the sealed portion has a sufficient flexural strength against a vacuum stress and a thermal stress generated in a process for producing an image display device, particularly in a step of evacuating the vacuum envelope at a high temperature, and a problem of breakage of the sealed portion of the vacuum envelope in the process for producing an image display device is dissolved.

In the vacuum envelope for an image display device of the present invention, the sealed portion is excellent in insulating strength, and the vacuum envelope has characteristics preferred as a vacuum envelope for an image display device.

In the vacuum envelope for an image display device of the present invention, sealing is carried out with an organic sealant, whereby the vacuum envelope is free from lead, and influences over environment are considered.

The sealant for an image display device of the present invention is an organic sealant containing no lead, whereby its influences over environment are considered, and sealing can be carried out at a temperature lower than 400°C with it, and its fired body has a sufficient strength in a high temperature environment which it undergoes in the process for producing an image display device.

Further, the fired body of the sealant for an image display device of the present invention generates substantially no cracked gas in a high temperature environment which it undergoes in the process for producing an image display device, and an image display device produced will not be impaired.

Still further, the sealant for an image display device of the present invention is excellent in handling efficiency in a high temperature environment which it undergoes in the process for producing an image display device.

The image display device of the present invention is excellent in display characteristics since the sealed portion will not be broken in the production process, and firing of the sealant in the production process is carried out at a temperature lower than 400°C.

The method for sealing a vacuum envelope for an image display device of the present invention has such advantages that the operation is easy, and the sealed portion will not be broken in the process.

### BRIEF EXPLANATION OF THE DRAWINGS

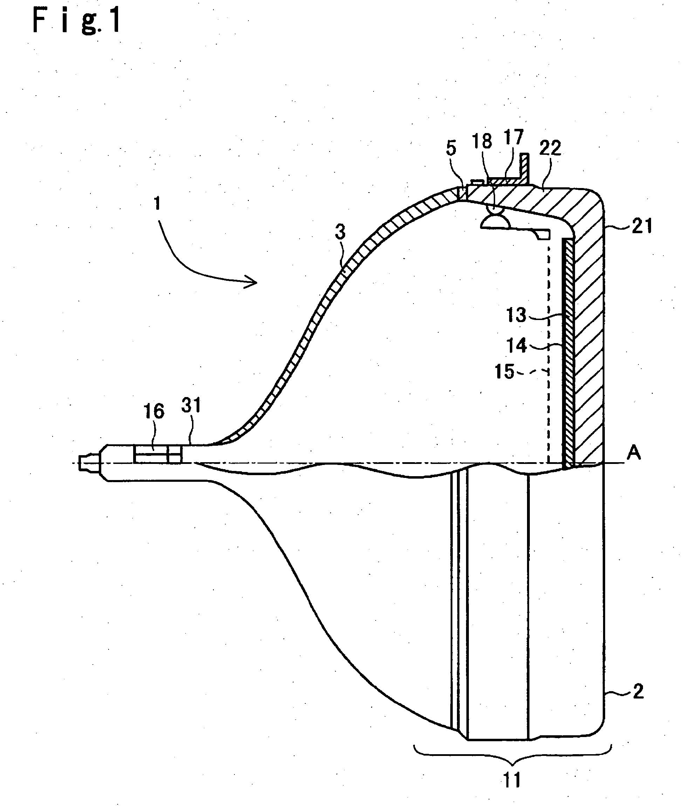

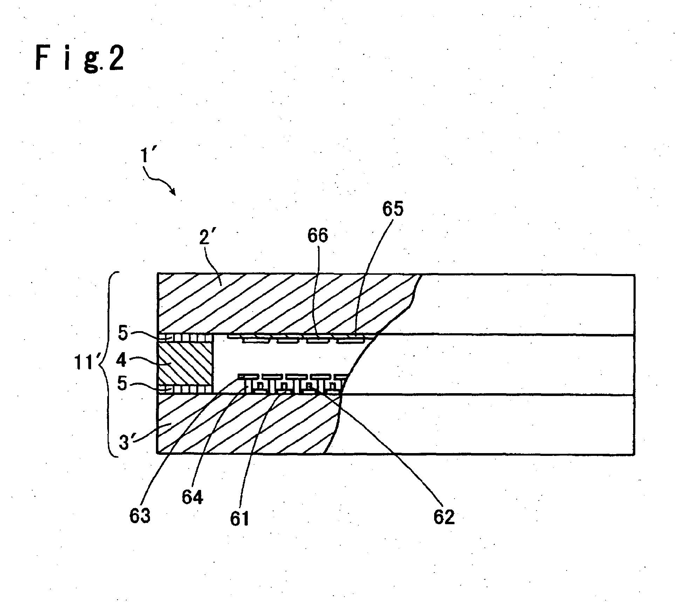

Fig. 1 is a partially cut side view illustrating one embodiment of the image display device of the present invention, and the image display device is constituted as a CRT. Fig. 2 is a partially cut side view illustrating another embodiment of the image display device of the present invention, and the image display device is constituted as a typical FED.

### EXPLANATION OF SYMBOLS

- 1, 1':: Image display device
- 11:: Vacuum envelope (glass valve)
- 11':: Vacuum envelope
- 13:: Phosphor
- 14:: Aluminum film
- 15:: Shadow mask
- 16:: Electron gun
- 17:: Explosion-proof reinforcing band
- 18:: Stud pin
- 2:: Image display panel portion
- 2':: Image display panel portion (front panel portion)
- 21:: Image display region
- 22:: Skirt portion
- 3:: Glass funnel portion
- 3':: Rear panel portion
- 31:: Neck portion
- 4:: Exterior frame
- 5:: Organic sealant layer
- 61:: Cathode
- 62:: Field emission cold cathode
- 63:: Gate electrode
- 64:: Insulating layer
- 65:: Anode
- 66:: Phosphor pixel

### BEST MODE FOR CARRYING OUT THE INVENTION

Now, the present invention will be explained in detail below with reference to drawings.

In the present invention, the image display device is a so-called cathode luminescence type one wherein in a high vacuum, electrons emitted from a cathode and moving at a high speed are made to collide with a phosphor to cause excitation and light emission. Such a cathode luminescence type image display device is represented by a cathode ray tube (CRT) and an image display device having field emission cold cathode (FED).

Such an image display device has a vacuum envelope the interior of which is in a high vacuum, so as to realize cathode luminescence. In the vacuum envelope, a drive circuit to emit high speed electron beams and an image display panel portion coated with a phosphor which is excited by collision of the electron beams to cause fluorescence are provided.

The image display device of the present invention will be explained in detail below with reference to structures of conventional CRT and FED as examples. However, the image display device of the present invention is not limited only to CRT and FED, and widely includes image display devices having a vacuum envelope. As another example of the image display device having a vacuum envelope, a vacuum fluorescent display (VFD) may be mentioned.

Fig. 1 is a partially cut side view illustrating one embodiment of the image display device of the present invention, and the image display device 1 is constituted as a CRT. In Fig. 1, the right side of the view corresponds to the front side, and the left side corresponds to the back side.

In Fig. 1, the image display device 1 has a vacuum envelope (glass valve) 11 comprising an image display panel portion 2 and a glass funnel portion 3. The image display panel portion 2 constituting the front side of the vacuum envelope 11 comprises a substantially plane image display region 21 located in the front portion thereof to display an image, and a skirt portion 22 extending from the side portion of the face portion including the image display region 21 toward the back portion. At the back end of the glass funnel portion 3 constituting the back side of the vacuum envelope 11, a neck 31 in which an electron gun 16 is accommodated is provided. The image display panel portion 2 and the glass funnel portion 3 constituting the vacuum envelope 11 are usually made of glass. However, the entire image display region 21 of the image display panel portion 2 is not necessarily made of glass, and the front side portion thereof may be made of a composite material comprising a light transmitting resin. Further, the members constituting the vacuum envelope 11 may be made of an inorganic material other than glass, specifically, they may be made of a ceramic or a metal, for example.

The image display device 1 of Fig. 1 has, in addition to the above members, an explosion-proof reinforcing band 17 to maintain strength, a phosphor 13 which generates fluorescence by an interaction with electron beams emitted from the electron gun 16, an aluminum film 14 which reflects the fluorescence to the image display surface 21 side, a shadow mask 15 to land the electron beams on a predetermined position of the phosphor 13, a stud pin 18 to fix the shadow mask 15 on the inner wall of the skirt portion 22, etc.

In the image display device 1 of the present invention, the image display panel portion 2 and the glass funnel portion 3 as members constituting the vacuum envelope 11 are sealed with an organic sealant layer 5. The organic sealant layer 5 is a layer of a fired body of an organic sealant obtained by applying an organic sealant to sealing surfaces of vacuum envelope-constituting members or attaching the organic sealant as a film to the sealing surfaces, followed by firing under desired conditions. In the image display device 1 of Fig. 1, the end surface at the back side of the skirt portion 22 of the image display panel portion 2 and the end surface at the front side of the glass funnel portion 3 are sealed with the organic sealant layer 5. In the image display device 1 of the present invention, the sealed portion of the vacuum envelope 11, specifically, a portion comprising the organic sealant layer 5 and the vacuum envelope-constituting members sealed with the organic sealant layer 5, or the sealed portion comprising the back end portion of the skirt portion 22 and the front end portion of the funnel portion 3 in Fig. 1, has a flexural strength of at least 30 MPa at 220°C.

In the present invention, the flexural strength of the sealed portion of the vacuum envelope of an image display device means both the flexural strength of the organic sealant layer 5 itself comprising the fired body of the organic sealant and flexural strength of the sealed portion having both organic sealant layer 5 and portion of the envelope-constituting members adjacent thereto. The image display device of the present invention is characterized in that the flexural strength of the sealed portion of the vacuum envelope is at least 30 MPa at 220°C. The flexural strength may be obtained, for example, as a measured value in a four-point flexural test carried out by a method in accordance with JIS R1601 as disclosed in Examples described hereinafter.

The vacuum envelope 11 after sealing is evacuated of air at a high temperature so that the interior thereof is in a high vacuum. This high temperature evacuation is carried out usually at a temperature of from 250 to 380°C, but as described in section Background Art, heat treatment in production of an image display device is carried out preferably at a temperature as low as possible. Accordingly, it is considered that the high temperature evacuation will be carried out at a temperature of from 200 to 330°C in future. In this occasion, a vacuum stress and a thermal stress are applied to the sealed portion of the vacuum envelope. In the image display device of the present invention, the sealed portion of the vacuum envelope has a flexural strength of at least 30 MPa at 220°C, whereby the sealed portion has a sufficient strength against a vacuum stress and a thermal stress applied in the process for producing an image display device particularly in a step of evacuating the vacuum envelope at a high temperature. Accordingly, the problem of breakage of the sealed portion in the production process particularly in a step of evacuating the vacuum envelope at a high temperature is dissolved.

In the image display device of the present invention, the flexural strength of the sealed portion of the vacuum envelope at 220°C is more preferably at least 40 MPa. When the flexural strength of the sealed portion of the vacuum envelope at 220°C is at least 40 MPa, particularly excellent strength against a vacuum stress and a thermal stress applied in the high temperature evacuation step will be obtained.

In the image display device of the present invention, it is preferred that the sealed portion of the vacuum envelope always has a flexural strength of at least 30 MPa within a temperature range of from 200 to 330°C. When the flexural strength of the sealed portion of the vacuum envelope is always at least 30 MPa within the above temperature range, the sealed portion will always have a sufficient strength in a temperature region expected in a high temperature evacuation step to be carried out in future. More preferably, the flexural strength of the sealed portion of the vacuum envelope is always at least 40 MPa within a temperature range of from 200 to 330°C.

Fig. 2 is a partially cut side view illustrating another embodiment of the image display device of the present invention, and the image display device is constituted as a typical FED. In Fig. 2, the upper side of the view corresponds to the front side, and the lower side corresponds to the back side. In the image display device 1' of Fig. 2, a vacuum envelope 11' comprises a front panel portion (image display panel portion) 2' located in the front portion, and in the back portion, a rear panel portion 3' disposed to face the front panel portion 2', and an exterior frame 4 disposed between the front panel portion 2' and the rear panel portion 3'. The front panel portion 2', the rear panel portion 3' and the exterior frame 4 which are members to constitute the vacuum envelope 11' are usually made of glass. However, they may be made of an inorganic material other than glass, such as a ceramic or a metal. The bonded surfaces of the members constituting the vacuum envelope 11' are sealed with an organic sealant layer 5. Accordingly, the bonded surfaces of the front panel portion 2' and the exterior frame 4, and the bonded surface of the rear panel portion 3' and the exterior frame 4, are sealed with the organic sealant layer 5. In the image display device 1', the rear panel portion 3' is a field emission type electron source substrate, and it has cathodes 61 and field emission cold cathodes 62 formed on the cathodes 61 on its inner side surface i.e. on a surface which faces the front panel portion 2'. Further, on a surface of the rear panel portion 3' which faces the front panel portion 2', gate electrodes 63 to control electron current are formed with insulating layers 64 interposed therebetween. On the other hand, on a surface of the front panel portion 2' which faces the rear panel portion 3', anodes 65 and phosphor pixels 66 which are the pairs to the field emission cold cathodes 62 are formed.

Further, similar to the image display device 1 of the first embodiment of the present invention, a sealed portion of the vacuum envelope comprising the organic sealant layer and a portion of envelope-constituting members adjacent to the organic sealant layer has a flexural strength of at least 30 MPa at 220°C. In the image display device of the present invention, an organic sealant which forms the organic sealant layer when fired widely includes ones which are usually used as heat resistant adhesives, fired bodies of which have the above characteristics. The organic sealant which can be used for the image display device of the present invention will be described in detail hereinafter.

In the image display device of the present invention, the sealed portion of the vacuum envelope is required to have insulating characteristics. Accordingly, the sealed portion of the vacuum envelope preferably has a dielectric breakdown strength of at least 3 kV/mm. The dielectric breakdown strength required for the sealed portion of the vacuum envelope varies depending upon the structure of the image display device. Specifically, in a case where the image display device is constituted as a CRT as in the first embodiment of the present invention, the dielectric breakdown strength of the sealed portion is preferably at least 15 kV/mm, more preferably at least 20 kV/mm, furthermore preferably at least 25 kV/mm. On the other hand, in a case where the image display device is constituted as a FED as in the second embodiment of the present invention, the dielectric breakdown strength of the sealed portion is preferably at least 3 kV/mm, more preferably at least 8 kV/mm.

When the dielectric breakdown strength of the sealed portion of the vacuum envelope is within the above range, no insulation failure will take place at the time of operation of the image display device.

The image display device of the present invention is characterized by employing an organic sealant containing no lead as a sealant for envelope-constituting members. Accordingly, in the image display device of the present invention, the sealed portion of the vacuum envelope preferably contains substantially no lead. Here, "the sealed portion contains substantially no lead" means that the lead content in the organic sealant layer constituting the sealed portion is such a level that lead which is usually attached as an impurity to glass as the envelope-constituting members diffuses. Specifically, the lead content is preferably at most 0.1 mass%, more preferably at most 0.01 mass%, furthermore preferably at most 0.001 mass%, based on the mass of the organic sealant constituting the organic sealant layer.

In the image display device of the present invention, a lead-free inorganic sealant such as a phosphoric acid type or a bismuth type may be used in combination, under conditions that the above conditions are met. Such an inorganic sealant is preferably used in a case where the image display device has a constituting element which is required to be sealed at a higher temperature, specifically at a temperature of 400°C or higher, in a case where the characteristics have to be matched, or in other cases.

As described above, in the present invention, as the organic sealant for the vacuum envelope widely includes organic compounds which are usually used as heat resistant adhesives and which provide the above-defined flexural strength of the sealed portion of the vacuum envelope of at least 30 MPa at 220°C. As such organic compounds, specifically, a polyimide and a polyamic acid which is a precursor thereof, a polybenzimidazole, a polyquinoxaline, a polyphenylquinoxaline, an acetylene-terminal polyimide and a polyphenylquinoxaline may, for example, be mentioned.

The organic sealant of the present invention is required that its fired body is excellent in heat resistance. In the present invention, the heat resistance of the fired body of the organic sealant is evaluated by means of the ratio of the mass at 400°C to the mass at 20°C (room temperature) (hereinafter referred to as "mass ratio when heated at 400°C"). Specifically, the mass ratio when heated at 400°C is represented by the value m₄₀₀/m₂₀, where m₂₀ is the mass of the fired body at 20°C and m₄₀₀ is the mass of the fired body at 400°C.

The mass ratio (m₄₀₀/m₂₀) when heated at 400°C of the fired body of the organic sealant of the present invention is 0.99<m₄₀₀/m₂₀≦1.00. More preferably, 0.993<m₄₀₀/m₂₀≦1.00. When the mass ratio of the fired body when heated at 400°C is within the above range, the organic sealant will not decompose at the sealed portion to generate a large amount of a cracked gas in a step of evacuating the vacuum envelope at a high temperature, the obtained image display device will have favorable characteristics, and no failure in evacuation will occur.

Firing of the organic sealant is carried out under conventional conditions for the process for producing an image display device. Specifically, it may be carried out in an inert gas atmosphere such as in a nitrogen atmosphere or in an argon gas atmosphere, or may be carried out in the air. The firing temperature is usually within a range of at least 300°C and lower than 400°C, and is higher than the temperature in the subsequent high temperature evacuation step.

Further, the organic sealant of the present invention is required to have a moderately low viscosity when the envelope-constituting members are sealed. Namely, sealing of the envelope-constituting members is carried out by firing the organic sealant, and the fired body of the organic sealant is required to have a minimum viscosity of at most 10³ Pa·s, in a temperature range of at least 300°C and lower than 400°C, which the organic sealant may undergo during firing. The minimum viscosity of the fired body of the organic sealant within this temperature range is more preferably at most 5x10² Pa·s. When the minimum viscosity of the organic sealant within the above temperature range is within the above range, fluidity of the organic sealant at the time of sealing will be sufficient, the sealed portion will be excellent in strength, and there will be no problem of breakage of the sealed portion in the process for producing an image display device particularly in a step of evacuating the vacuum envelope at a high temperature.

The organic sealant of the present invention is used as the sealant of the envelope-constituting members, and accordingly it is preferred that the thermal expansion characteristics of the fired body will not largely change in a high temperature region, as characteristics of the sealant itself. Namely, the fired body of the organic sealant of the present invention has a glass transition temperature (Tg) of preferably at least 175°C, more preferably at least 220°C, furthermore preferably at least 250°C, as measured by a differential scanning calorimeter (DSC).

Further, the fired body of the organic sealant of the present invention is preferably excellent in mechanical strength in a high temperature environment. Namely, the fired body of the organic sealant of the present invention has a flexural modulus at 220°C of preferably at least 100 MPa, more preferably at least 300 MPa, furthermore preferably at least 500 MPa.

The flexural modulus of the fired body of the organic sealant can be determined, specifically, for example, by means of a dynamic mechanical spectrometer (DMS) as disclosed in Examples described hereinafter.

When the fired body of the organic sealant has a flexural modulus of at least 100 MPa at 220°C, the sealed portion of the vacuum envelope of the obtained image display device has strength, particularly sufficient strength against a vacuum stress and a thermal stress applied in the high temperature evacuation step, and there will be no problem of breakage of the sealed portion in the production process particularly in the step of evacuating the vacuum envelope at a high temperature.

The organic sealant of the present invention having the above characteristics preferably contains as a polyimide compound or a polyamic acid compound as a precursor thereof as the main component.

When the organic sealant of the present invention contains a polyimide compound or a polyamic acid compound as a precursor thereof as the main component, the imide group content in the polyimide compound (molecular weight of imide groups/molecular weight of polyimide) or the amide group content in the polyamic acid compound (molecular weight of amide groups/molecular weight of polyamic acid) is preferably within a range of from 10 to 31%, more preferably from 14 to 26%. When the imide group content in the polyimide compound or the amide group content in the polyamic acid compound is within the above range, high adhesive strength will be obtained.

The polyimide compound is preferably a polyimide compound having a structure represented by the following Formula 1:

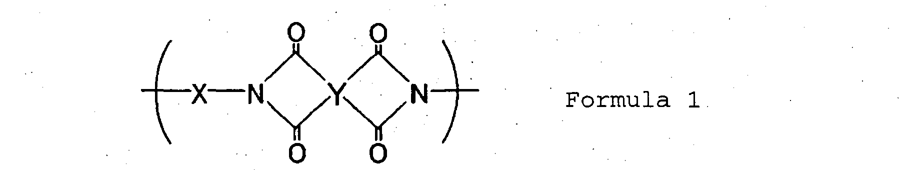

In the above Formula 1, X represents the main skeleton of a diamine compound, and Y represents the main skeleton of a tetracarboxylic dianhydride. The main skeleton of a diamine compound means the main chain of a diamine compound from which amino groups are removed, and the main skeleton of a tetracarboxylic dianhydride means the main chain from which carboxylic dianhydrides are removed.

X and Y more specifically mean as follows.
(A) When X is any one of the following Formulae 4 to 8, Y is any one of the following Formulae 9 to 14. In the following Formulae 4 to 8, R each independently is any one selected from the group consisting of -, -O-, -CO-, -SO₂-, -S-, -CH₂- and -C(CH₃)₂, n each independently is from 0 to 7, and Z each independently is CH₃ or a phenyl group.
(B) When X is the following Formula 15, Y is the following Formula 16 or 17. In the following Formula 15, R each independently is any one selected from the group consisting of -, -O-, -CO-, -SO₂-, -S-, -CH₂- and -C(CH₃)₂, n each independently is from 0 to 7, and Z each independently is CH₃ or a phenyl group:

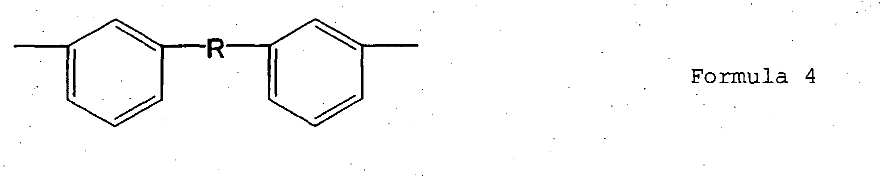

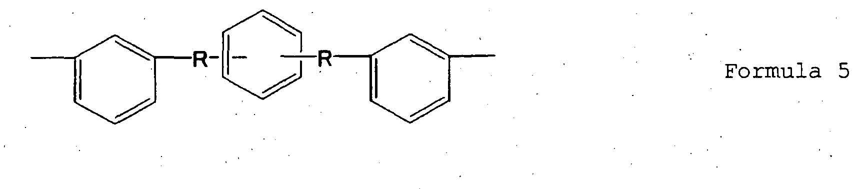

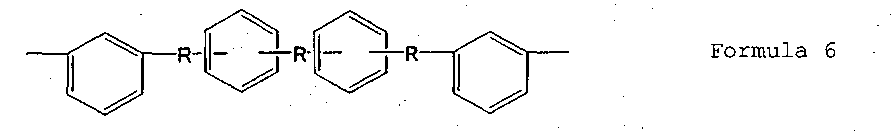

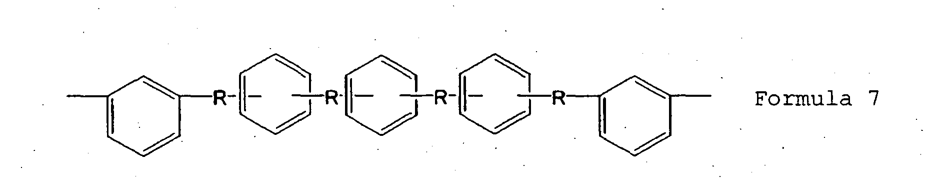

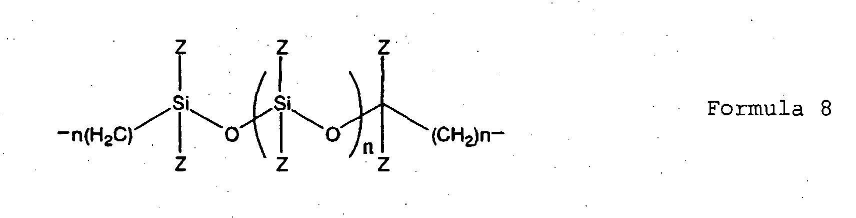

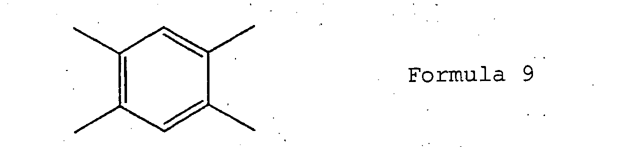

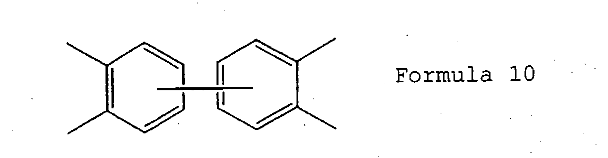

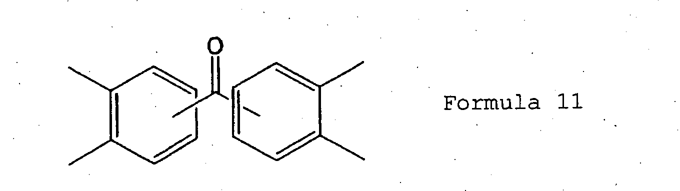

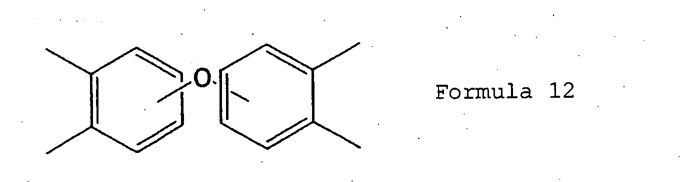

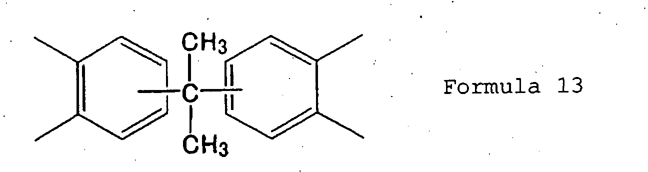

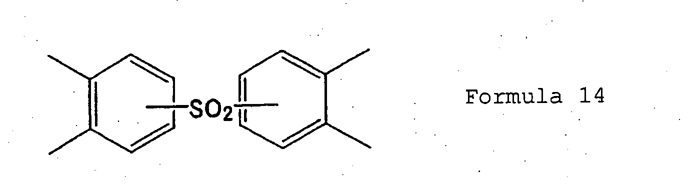

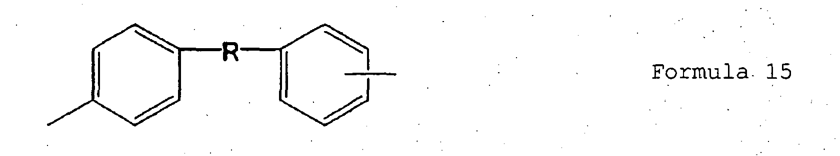

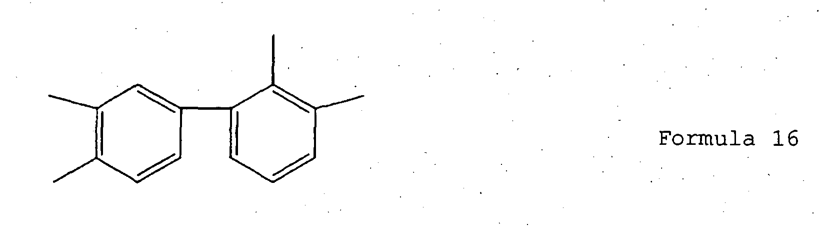

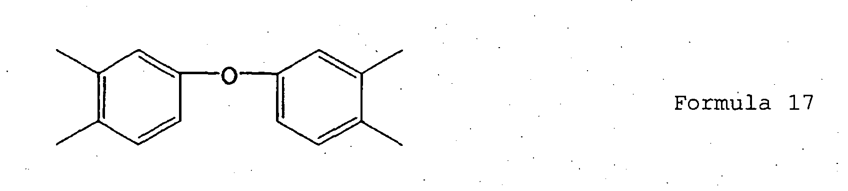

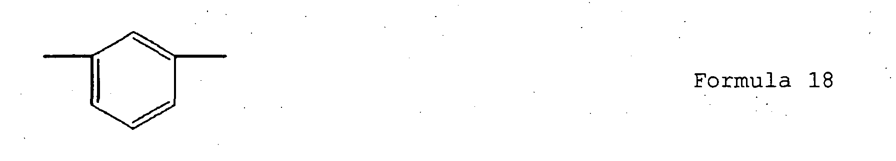

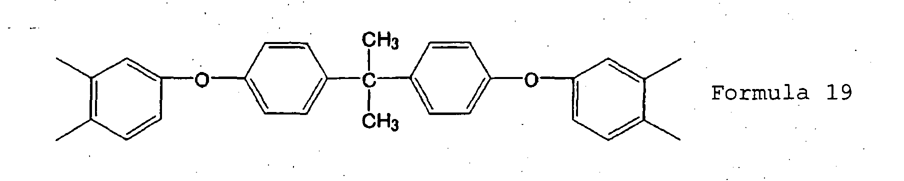

The polyimide compound may comprise the structure represented by the Formula 1 alone, but its terminal portion may be sealed with a monoamine or a dicarboxylic anhydride. The polyimide compound the terminal of which is sealed with a monoamine or a dicarboxylic anhydride preferably has a structure represented by the following Formula 2 or 3. In the following Formulae 2 and 3, X and Y are as defined for the Formula 1, X' represents the main skeleton of a monoamine compound, and Y' represents the main skeleton of a dicarboxylic anhydride. The main skeleton of a monoamine compound means the main chain of a monoamine compound from which an amino group is removed, and the main skeleton of a dicarboxylic anhydride means the main chain from which carboxylic anhydrides are removed:

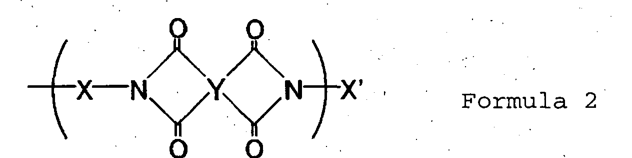

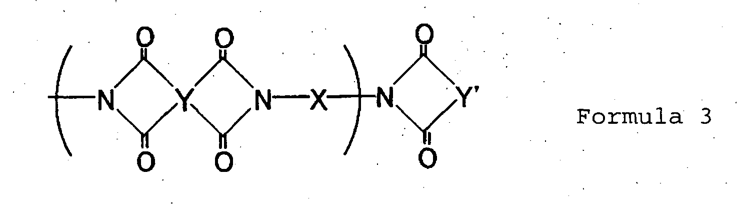

Specifically, the polyamic acid compound is preferably a polyamic acid compound represented by the following Formula 20:

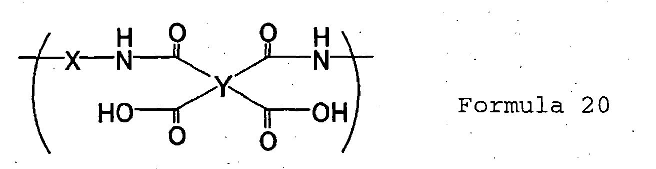

In the above Formula 20, X represents the main skeleton of a diamine compound, and Y represents the main skeleton of a tetracarboxylic dianhydride.
(A) When X is any one of the above Formulae 4 to 8, Y is any one of the above Formulae 9 to 14. In the above Formulae 4 to 8, R each independently is any one selected from the group consisting of -, -O-, -CO-, -SO₂-, -S-, -CH₂- and -C(CH₃)₂, n each independently is from 0 to 7, and Z each independently is CH₃ or a phenyl group.
(B) When X is the above Formula 15, Y is the above Formula 16 or 17. In the above Formula 15, R each independently is any one selected from the group consisting of -, -O-, -CO-, -SO₂-, -S-, -CH₂- and -C(CH₃)₂, n each independently is from 0 to 7, and Z each independently is CH₃ or a phenyl group.
(C) When X is the above Formula 18, Y is the above Formula 19.

The polyimide compound having a structure of the Formula 1 and the polyamic acid compound of the Formula 20 are prepared by condensation of a diamine compound and a tetracarboxylic dianhydride. Their molecular weights can be controlled by adjusting the molar ratio of monomer components in the same manner as in a case of a conventional polycondensed polymer. That is, it becomes possible to form a polymer by using from 0.8 to 1.2 mol of a diamine compound per mol of a tetracarboxylic dianhydride. When the polyimide compound or the polyamic acid compound is a polymer, its fired body tends to be excellent in mechanical strength, insulating characteristics, etc., and no out gas will be generated in a high temperature environment, and thus such a polymer is preferred for an organic sealant. As the molar ratio, the diamine compound is more preferably from 0.9 to 1.1 mol, furthermore preferably from 0.95 to 1.05 mol, per mol of the acid dianhydride.

As diamines which can be used for preparation of the polyimide compound having a structure of the Formula 1 or the polyamic acid compound of the Formula 20, specifically, the following diamine compounds may, for example, be mentioned.
a) p-Phenylenediamine and m-phenylenediamine having one benzene ring.
b) 3,3'-Diamino diphenyl ether, 3,4'-diamino diphenyl ether, 4,4'-diaminodiphenyl ether, 3,3'-diaminodiphenyl sulfide, 3,4'-diaminodiphenyl sulfide, 4,4'-diaminodiphenyl sulfide, 3,3'-diaminodiphenyl sulfone, 3,4'-diaminodiphenyl sulfone, 4,4'-diaminodiphenyl sulfone, 3,3'-diaminobenzophenone, 4,4'-diaminobenzophenone, 3,4'-diaminobenzophenone, 3,3'-diaminodiphenylmethane, 4,4'-diaminodiphenylmethane, 3,4'-diaminodiphenylmethane, 2,2-di(3-aminophenyl)propane, 2,2-di(4-aminophenyl)propane, 2-(3-aminophenyl)-2-(4-aminophenyl)propane, 2,2-di(3-aminophenyl)-1,1,1,3,3,3-hexafluoropropane, 2,2-di(4-aminophenyl)-1,1,1,3,3,3-hexafluoropropane, 2-(3-aminophenyl)-2-(4-aminophenyl)-1,1,1,3,3,3-hexafluoropropane, 1,1-di(3-aminophenyl)-1-phenylethane, 1,1-di(4-aminophenyl)-1-phenylethane and 1-(3-aminophenyl)-1-(4-aminophenyl)-1-phenylethane, having two benzene rings.
c) 1,3-Bis(3-aminophenoxy)benzene, 1,3-bis(4-aminophenoxy)benzene, 1,4-bis(3-aminophenoxy)benzene, 1,4-bis(4-aminophenoxy)benzene, 1,3-bis(3-aminobenzoyl)benzene, 1,3-bis(4-aminobenzoyl)benzene, 1,4-bis(3-aminobenzoyl)benzene, 1,4-bis(4-aminobenzoyl)benzene, 1,3-bis(3-amino-α,α-dimethylbenzyl)benzene, 1,3-bis(4-amino-a,a-dimethylbenzyl)benzene, 1,4-bis(3-amino-α,α-dimethylbenzyl)benzene, 1,4-bis(4-amino-α,α-dimethylbenzyl)benzene, 1,3-bis(3-amino-α,α-ditrifluoromethylbenzyl)benzene, 1,3-bis(4-amino-α,α-ditrifluoromethylbenzyl)benzene, 1,4-bis(3-amino-α,α-ditrifluoromethylbenzyl)benzene, 1,4-bis(4-amino-α,α-ditrifluoromethylbenzyl)benzene, 2,6-bis(3-aminophenoxy)benzonitrile and 2,6-bis(3-aminophenoxy)pyridine, having three benzene rings.
d) 4,4'-Bis(3-aminophenoxy)biphenyl, 4,4'-bis(4-aminophenoxy)biphenyl, bis[4-(3-aminophenoxy)phenyl] ketone, bis[4-(4-aminophenoxy)phenyl] ketone, bis[4-(3-aminophenoxy)phenyl] sulfide, bis[4-(4-aminophenoxy)phenyl] sulfide, bis[4-(3-aminophenoxy)phenyl] sulfone, bis[4-(4-aminophenoxy)phenyl] sulfone, bis[4-(3-aminophenoxy)phenyl] ether, bis[4-(4-aminophenoxy)phenyl] ether, 2,2-bis[4-(3-aminophenoxy)phenyl]propane, 2,2-bis[4-(4-aminophenoxy)phenyl]propane, 2,2-bis[3-(3-aminophenoxy)phenyl]-1,1,1,3,3,3-hexafluoropropane and 2,2-bis[4-(4-aminophenoxy)phenyl]-1,1,1,3,3,3-hexafluoropropane, having four benzene rings.
e) 1,3-Bis[4-(3-aminophenoxy)benzoyl]benzene, 1,3-bis[4-(4-aminophenoxy)benzoyl]benzene, 1,4-bis[4-(3-aminophenoxy)benzoyl]benzene, 1,4-bis[4-(4-aminophenoxy)benzoyl]benzene, 1,3-bis[4-(3-aminophenoxy)-α,α-dimethylbenzyl]benzene; 1,3-bis[4-(4-aminophenoxy)-α,α-dimethylbenzyl]benzene, 1,4-bis[4-(3-aminophenoxy)-α,α-dimethylbenzyl]benzene and 1,4-bis[4-(4-aminophenoxy)-α,α-dimethylbenzyl]benzene, having five benzene rings.
f) 4,4'-Bis[4-(4-aminophenoxy)benzoyl]diphenyl ether, 4,4'-bis[4-(4-amino-α,α-dimethylbenzyl)phenoxy]benzophenone, 4,4'-bis[4-(4-amino-α,α-dimethylbenzyl)phenoxy]diphenyl sulfone and 4,4'-bis[4-(4-aminophenoxy)phenoxy]diphenyl sulfone, having six benzene rings.
g) 3,3'-Diamino-4,4'-diphenoxybenzophenone, 3,3'-diamino-4,4'-dibiphenoxybenzophenone, 3,3'-diamino-4-phenoxybenzophenone and 3,3'-diamino-4-biphenoxybenzophenone, having an aromatic substituent.
h) 6,6'-Bis(3-aminophenoxy)-3,3,3'3'-tetramethyl-1,1'-spirobiindan and 6,6'-bis(4-aminophenoxy)-3,3,3'3'-tetramethyl-1;1'-spirobiindan, having a spirobiindan ring.
i) 1,3-Bis(3-aminopropyl)tetramethyldisiloxane, 1,3-bis(4-aminobutyl)tetramethyldisiloxane, α,ω-bis(3-aminopropyl)polydimethylsiloxane and α,ω-bis(3-aminobutyl)polydimethylsiloxane, being siloxane diamines.
j) Bis(aminomethyl) ether, bis(2-aminoethyl) ether, bis(3-aminopropyl) ether, bis(2-aminomethoxy)ethyl] ether, bis[2-(2-aminoethoxy)ethyl] ether, bis[2-(3-aminopropoxy)ethyl] ether, 1,2-bis(aminomethoxy)ethane, 1,2-bis(2-aminoethoxy)ethane, 1,2-bis[2-(aminomethoxy)ethoxy]ethane, 1,2-bis[2-(2-aminoethoxy)ethoxy]ethane, ethylene glycol bis(3-aminopropyl) ether, diethylene glycol bis(3-aminopropyl) ether and triethylene glycol bis(3-aminopropyl) ether, being ethylene glycol diamines.
k) Ethylenediamine, 1,3-diaminopropane, 1,4-diaminobutane, 1,5-diaminopentane, 1,6-diaminohexane, 1,7-diaminoheptane, 1,8-diaminooctane, 1,9-diaminononane, 1,10-diaminodecane, 1,11-diaminoundecane and 1,12-diaminododecane, being methylene diamines.
l) 1,2-diaminocyclohexane, 1,3-diaminocyclohexane, 1,4-diaminocyclohexane, 1,2-di(2-aminoethyl)cyclohexane, 1,3-di(2-aminoethyl)cyclohexane, 1,4-di(2-aminoethyl)cyclohexane, bis(4-aminocyclohexyl)methane, 2,6-bis(aminomethyl)bicyclo[2.2.1]heptane and 2,5-bis(aminomethyl)bicyclo[2.2.1]heptane, being alicyclic diamines.

The above exemplified diamine compounds may suitably be used alone or as mixed. Further, the diamine compound may be a diamine in which some of or all hydrogen atoms on the aromatic ring of the diamine compound substituted by a substituent selected from a fluoro group, a methyl group, a methoxy group, a trifluoromethyl group and a trifluoromethoxy group.

Further, it may be one having an ethynyl group, a benzocyclobuten-4'-yl group, a vinyl group, an allyl group, a cyano group, an isocyanate group, a nitrile group or an isopropenyl group being a crosslinking site introduced as a substituent to some of or all hydrogen atoms on the aromatic ring of the above diamine. Further, it may be one having a vinylene group, a vinylidene group or an ethylidene group being the crosslinking site incorporated into the main skeleton, not as a substituent.

Further, a part of the diamine compound may be replaced with a triamine or a tetramine for the purpose of introducing branches.

As the tetracarboxylic dianhydride which can be used to prepare the polyimide compound having a structure of the Formula 1 and the polyamic acid compound of the Formula 20, specifically, the following compounds may, for example, be mentioned.

Pyromellitic dianhydride, 3,3',4,4'-biphenyltetracarboxylic dianhydride, 3,3' ,4,4'-benzophenone tetracarboxylic dianhydride, dianhydride of bis(3,4-dicarboxyphenyl) ether, dianhydride of bis(3,4-dicarboxyphenyl) sulfide, dianhydride of bis(3,4-dicarboxyphenyl) sulfone, dianhydride of 2,2-bis(3,4-dicarboxyphenyl)propane, dianhydride of 2,2-bis(3,4-dicarboxyphenyl)-1,1,1,3,3,3-hexafluoropropane, dianhydride of 1,3-bis(3,4-dicarboxyphenoxy)benzene, dianhydride of 1,4-bis(3,4-dicarboxyphenoxy)benzene, dianhydride of 4,4'-bis(3,4-dicarboxyphenoxy)biphenyl, dianhydride of 2,2-bis[(3,4-dicarboxyphenoxy)phenyl]propane, 2,3,6,7-naphthalenetetracarboxylic dianhydride, 1,4,5,8-naphthalenetetracarboxylic dianhydride, ethylenetetracarboxylic dianhydride, butanetetracarboxylic dianhydride, cyclopentanetetracarboxylic dianhydride, 2,2',3,3'-benzophenonetetracarboxylic dianhydride, 2,2',3,3'-biphenyltetracarboxylic dianhydride, dianhydride of 2,2-bis (2, 3-dicarboxyphenyl) propane, dianhydride of 2,2-bis(2,3-dicarboxyphenyl)-1,1,1,3,3,3-hexafluoropropane, dianhydride of bis(2,3-dicarboxyphenyl) ether, dianhydride of bis(2,3-dicarboxyphenyl) sulfide, dianhydride of bis(2,3-dicarboxyphenyl) sulfone, dianhydride of 1,3-bis(2,3-dicarboxyphenoxy)benzene, dianhydride of 1,4-bis(2,3-dicarboxyphenoxy)benzene and 1,2,5,6-naphthalenetetracarboxylic dianhydride.

The above exemplified tetracarboxylic dianhydrides may suitably be used alone or as mixed.

Further, any of the above tetracarboxylic dianhydrides may be used in such a manner that some of or all hydrogen atoms on the aromatic ring thereof are substituted by a substituent selected from a fluoro group, a methyl group, a methoxy group, a trifluoromethyl group and a trifluoromethoxy group.

Further, an ethynyl group, a benzocyclobuten-4'-yl group, a vinyl group, an allyl group, a cyano group, an isocyanate group, a nitrile group or an isopropenyl group being a crosslinking site may be introduced as a substituent to some of or all hydrogen atoms on the aromatic ring of the above acid dianhydride. Further, a vinylene group, a vinylidene group or an ethylidene group being a crosslinking site may be incorporated into the main chain skeleton, not as a substituent, preferably within a range not to impair moldability.

Further, a part of the tetracarboxylic dianhydride may be replaced with a hexacarboxylic trianhydride or an octacarboxylic tetranhydride for the purpose of introducing branches.

Further, to impart heat resistance to the organic sealant, in preparation of the polyimide compound or the polyamic acid compound, a dicarboxylic anhydride or a monoamine compound may be incorporated as a terminal sealing compound. The polyimide compounds of the above Formulae 2 and 3 can be obtained by sealing the terminal of the polyimide compound with a dicarboxylic anhydride or a monoamine compound.

As the dicarboxylic anhydride which can be used as the terminal sealing compound, specifically, phthalic anhydride, 2,3-benzophenonedicarboxylic anhydride, 3,4-benzophenonedicarboxylic anhydride, dianhydride of 2,3-dicarboxyphenyl phenyl ether, dianhydride of 3,4-dicarboxyphenyl phenyl ether, 2,3-biphenyldicarboxylic anhydride, 3,4-biphenyldicarboxylic anhydride, anhydride of 2,3-dicarboxyphenylphenyl sulfone, anhydride of 3,4-dicarboxyphenylphenyl sulfone, anhydride of 2,3-dicarboxyphenylphenyl sulfide, anhydride of 3,4-dicarboxyphenylphenyl sulfide, 1,2-naphthalenedicarboxylic anhydride, 2,3-naphthalenedicarboxylic anhydride, 1,8-naphthalenedicarboxylic anhydride, 1,2-anthracenedicarboxylic anhydride, 2,3-anthracenedicarboxylic anhydride and 1,9-anthracenedicarboxylic anhydride may, for example, be mentioned. Such a dicarboxylic anhydride may be substituted by a group having no reactivity with an amine compound or a tetracarboxylic dianhydride. They may be used alone or as a mixture of two or more of them. Among these aromatic dicarboxylic anhydrides, preferred is phthalic anhydride.

As the monoamine compound which can be used as the terminal sealing compound, specifically, the following compounds may, for example, be mentioned. Aniline, o-toluidine, m-toluidine, p-toluidine, 2,3-xylidine, 2,6-xylidine, 3,4-xylidine, 3,5-xylidine, o-chloroaniline, m-chloroaniline, p-chloroaniline, o-bromoaniline, m-bromoaniline, p-bromoaniline, o-nitroaniline, p-nitroaniline, m-nitroaniline, o-aminophenol, p-aminophenol, m-aminophenol, o-anisidine, m-anisidine, p-anisidine, o-phenetidine, m-phenetidine, p-phenetidine, o-aminobenzaldehyde, p-aminobenzaldehyde, m-aminobenzaldehyde, o-aminobenzonitrile, p-aminobenzonitrile, m-aminobenzonitrile,2-aminobiphenyl, 3-aminobiphenyl, 4-aminobiphenyl, 2-aminophenyl phenyl ether, 3-aminophenyl phenyl ether, 4-aminophenyl phenyl ether, 2-aminobenzophenone, 3-aminobenzophenone, 4-aminobenzophenone, 2-aminophenylphenyl sulfide, 3-aminophenylphenyl sulfide, 4-aminophenylphenyl sulfide, 2-aminophenylphenyl sulfone, 3-aminophenylphenyl sulfone, 4-aminophenylphenyl sulfone, α-naphthylamine,-naphthylamine, 1-amino-2-naphthol, 5-amino-1-naphthol, 2-amino-1-naphthol, 4-amino-1-naphthol, 5-amino-2-naphthol, 7-amino-2-naphthol, 8-amino-1-naphthol, 8-amino-2-naphthol, 1-aminoanthracene, 2-aminoanthracene, 9-aminoanthracene and the like. Usually, among these aromatic monoamines, preferred is an aniline derivative. They may be used alone or as a mixture of two or more of them.

These monoamine compounds and/or dicarboxylic anhydrides may be used alone or as a mixture of two or more of them. As the amount of such a terminal sealing compound used, the monoamine compound (when the excess component is a tetracarboxylic dianhydride) or the dicarboxylic anhydride (when the excess component is a diamine) is used in an amount of from one to several times the difference in number of mols used between the diamine compound and the tetracarboxylic dianhydride. However, it is common to use the terminal sealing compound in an amount of at least about 0.01 molar time the amount of one component.

Further, a part of the structure of such a monoamine compound or a dicarboxylic anhydride may be substituted by a vinyl group, an acetyl group, an ethynyl group, an allyl group, a cyano group, an isocyanate group, a nitrilo group, an isopropenyl group, a vinylene group, a vinylidene group, an ethynylidene group or a benzocyclobuten-4'-yl group being a crosslinking site.

The reaction for preparation of the polyimide compound or the polyamic acid compound is carried out usually in an organic solvent. The organic solvent used for the reaction may be any solvent so long as it has no problem for preparation of the polyimide compound and the polyamic acid compound, and the formed polyimide compound or the polyamic acid compound is dissolved in it. Specifically, an amide type solvent, an ether type solvent or a phenol type solvent may be mentioned, and more specifically, N,N-dimethylformamide, N,N-dimethylacetamide, N,N-diethylacetamide, N,N-dimethylmethoxyacetamide, N-methyl-2-pyrrolidone, 1,3-dimethyl-2-imidazolidinone, N-methylcaplolactam, 1,2-dimethoxyethane-bis(2-methoxyethyl) ether, 1,2-bis(2-methoxyethoxy)ethane, bis[2-(2-methoxyethoxy)ethyl] ether, tetrahydrofuran, 1,3-dioxane, 1,4-dioxane, pyridine, picoline, dimethyl sulfoxide, dimethylsulfone, tetramethylurea, hexamethylphosphoramide, phenol, o-cresol, m-cresol, p-cresol, cresylic acid, o-chlorophenol, m-chlorophenol, p-chlorophenol and anisole may, for example, be mentioned. They may be used alone or as a mixture of two or more of them. An amide type solvent is particularly preferred in view of stability of a solution and workability.

The prepared polyimide compound or the polyamic acid compound as dissolved in such an organic solvent may be used as an organic sealant solution described hereinafter. In the case of use in such a state, the solvent for the polyimide compound is preferably cresol, and the solvent for the polyamic acid compound is preferably N-methylpyrrolidone. Such an organic solvent may be used also as a solvent when the prepared polyimide compound or the polyamic acid compound is used as a solution.

Further, for preparation of the polyimide compound or the polyamic acid compound, an organic base catalyst may coexist. As the organic base catalyst, a tertiary amine such as pyridine, α-picoline, β-picoline, γ-picoline, quinoline, isoquinoline or triethylamine may be used, and particularly preferred is pyridine or γ-picoline. The amount of such a catalyst used is from 0.001 to 0.50 mol per mol of the total tetracarboxylic dianhydride. It is particularly preferably from 0.01 to 0.1 mol.

The reaction temperature when the polyamic acid compound is prepared is from -20 to 60°C, preferably from 0 to 40°C. The reaction time varies depending upon the type of the tetracarboxylic dianhydride used, the type of the solvent, the reaction temperature, etc., and it is from 1 to 48 hours as a measure, and is usually from several hours to a dozen hours. In the present application, the organic solvent solution containing a polyamic acid compound obtained by such a method is referred to as an organic sealant solution containing a polyamic acid compound. The polyamic acid compound is a precursor of a polyimide compound, and the polyamic acid compound thus obtained is then subjected to heat dehydration at a temperature within a range of at least 150°C and lower than 400°C for imidation and is used as an organic sealant.

Further, the reaction temperature when the polyimide compound is prepared is at least 100°C, preferably from 150 to 300°C, and the reaction is carried out usually by drawing water generated by the reaction. It is possible to prepare, prior to the imidation, a polyamic acid compound as the precursor thereof at a low temperature of at most 100°C first, and then increase the temperature to at most 100°C for imidation, or it is possible to simply mix a tetracarboxylic dianhydride with a diamine compound and then immediately increase the temperature to at most 100°C in the presence of an organic base for imidation. The reaction time varies depending upon the type of the tetracarboxylic dianhydride used, the type of the solvent, the type and amount of the organic base catalyst, the reaction temperature, etc. As a measure, the reaction is carried out until the amount of distilled water substantially reaches a theoretical amount (usually not all distilled water is recovered, and the recovery rate is from about 70 to 90%), and the reaction time is usually at a level of from several hours to a dozen hours. In this case, it is common and effective to remove water generated by the imidation reaction by adding an azeotropic agent such as toluene to the reaction system and removing the water by azeotropy. Otherwise, it is possible to prepare the polyamic acid as a precursor and then chemically imidate it by using an imidating agent such as acetic anhydride. In the present application, the organic solvent solution containing a polyimide compound obtained by such a method is referred to as an organic sealant solution containing a polyimide compound. The organic sealant solution containing a polyimide compound has favorable storage stability, and when it is applied to the sealing surfaces of envelope-constituting members made of glass, heated and dried and then fired, a sufficient 90° sealing peel strength will be obtained even by firing relatively at a low temperature under a low pressure. The drying temperature varies depending upon the boiling point of the solvent and can not be specified, but is usually from 100 to 300°C. Firing of the sealant is carried out, as mentioned above, at a temperature within a range of at least 300°C and lower than 400°C.

The polyimide compound may be formed into a film by a known method, not as a solution having it dissolved in an organic solvent.

Further, in order to improve sealing properties of the organic sealant, a diaminosiloxane compound may be incorporated in the organic sealant, in addition to the above components (e.g. JP-A-5-74245, JP-A-5-98233, JP-A-5-98234, JP-A-5-98235, JP-A-5-98236, JP-A-5-98237 and JP-A-5-112760). The diaminosiloxane is represented by the above Formula 1, 2, 3 or 20 (wherein X in the Formulae is the Formula 8). Accordingly, when the diaminosiloxane is used in combination, as the polyimide compound or the polyamic acid compound, any one of the above formulae 1 to 3 and 20, wherein X is any of the Formulae 4 to 7, is used. The diaminosiloxane is used in an amount of at most 0.10 mol per mol of the polyimide compound having a structure of any of the formulae 1 to 3 or the polyamic acid compound of the formula 20. When the amount of the diaminosiloxane is at most 0.1 mol, heat resistance of the organic sealant originally has will not be impaired, and there will be no problem in storage stability such that the organic sealant solution undergoes layer separation.

As an index of the molecular weight of the polyimide compound, usually logarithmic viscosity number is employed. The logarithmic viscosity number of the polyimide compound of the present invention is from 0.01 to 5.0, preferably from 0.10 to 0.50, in a mixed solvent of p-chlorophenol and phenol (90:10) at a concentration of 0.5 g/dL at 35°C.

The molecular weight of the polyamic acid compound can be measured by gel permeation chromatography (GPC), and the mass average molecular weight of the polyamic acid of the present invention is from 4,000 to 30,000, preferably from 5,000 to 15,000.

Further, such an organic sealant may be mixed with a coupling agent, an inorganic filler or the like depending upon the purpose.

The coupling agent is used to improve sealing properties, and the amount of use is from 0.1 mass% to 5 mass% in the organic sealant. High sealing properties will be obtained by using at least 0.1 mass%. Further, heat resistance can be maintained by using at most 5 mass%. As the coupling agent which can be used, a known coupling agent may be used. Specifically, a trialkoxysilane compound or a methyl dialkoxysilane. compound may be mentioned. More specifically, γ-glycidoxypropylmethyldimethoxysilane, γ-glycidoxypropyltrimethoxysilane, γ-glycidoxypropylmethyldiethoxysilane, γ-glycidoxypropyltriethoxysilane, γ-aminopropylmethyldimethoxysilane, γ-aminopropyltrimethoxysilane, γ-aminopropylmethyldimethoxysilane, γ-aminopropyltrimethoxysilane, N-aminoethyl-γ-iminopropylmethyldimethoxysilane, N-aminoethyl-γ-iminopropyltrimethoxysilane, γ-mercaptopropylmethyldimethoxysilane, γ aminopropyltrimethoxysilane, γ-mercaptopropylmethyldimethoxysilane, γ-mercaptopropyltrimethoxysilane, isocyanatopropylmethyldiethoxysilane or γ-isocyanatopropyltriethoxysilane may, for example, be mentioned.

The inorganic filler may be used for the purpose of adjusting the viscosity of the solution, decreasing the thermal stress of the fired body, or for another purpose, and it may be selected from known inorganic compounds and is not particularly restricted. Specifically, it may, for example, be calcium carbonate, magnesium carbonate, barium sulfate, magnesium sulfate, aluminum silicate, zirconium silicate, iron oxide, titanium oxide, aluminum oxide (alumina), lead oxide, silicon dioxide, potassium titanate, kaolin, talc, asbestos powder, quartz powder, mica or glass fibers.

The sealing of envelope-constituting members of an image display device with the above organic sealant may be carried out in the same manner as a method of using a conventional glass frit. Namely, the organic sealant solution containing a polyimide compound or a polyamic acid is applied to sealing surfaces of the envelope-constituting members, or an organic sealant film made of a polyimide compound is applied to the sealing surfaces, drying or pre-firing is carried out at a relatively low temperature (150 to 200°C), and then the sealing surfaces are put together and fired at a temperature higher than the above temperature, specifically at a temperature within a range of at least 300°C and lower than 400°C for from 10 to 500 minutes, more preferably at a temperature within a range of at least 330°C and lower than 400°C for from 10 to 300 minutes, more preferably for 10 to 60 minutes, whereby the envelope-constituting members are sealed. Then, in order that the interior thereof is in a high vacuum, vacuum evacuation is carried out at a high temperature of from 200 to 330°C to produce a vacuum envelope for an image display device.

Since the firing temperature of the organic sealant of the present invention is lower than 400°C, problems such as thermal deformation of a metal member of an image display device which occur when a conventional frit glass sealing material is used, are dissolved. Further, the fired body of the organic sealant of the present invention has a flexural strength of at least 30 MPa at 220°C, whereby the sealed portion of the vacuum envelope has a sufficient strength against a vacuum stress and a thermal stress applied in a step of evacuating the vacuum envelope for an image display device at a high temperature, and a problem of breakage of the sealed portion in a process for producing an image display device is dissolved.

### EXAMPLES

Now, the present invention will be described in further detail with reference to Examples and Comparative

### Examples.

### PREPARATION EXAMPLE 1

To a container equipped with a stirrer, a reflux condenser and a nitrogen introduction tube, 36.1 g (0.098 mol) of 4,4'-bis(3-aminophenoxy)biphenyl, 0.496 g (0.002 mol) of a diaminosiloxane compound (manufactured by Dow Corning Toray Co., Ltd., product name BY16-871) and 225 g of N-methyl-2-pyrrolidone are put, and in a nitrogen atmosphere, 9.60 g (0.044 mol) of pyromellitic dianhydride and 12.95 g (0.044 mol) of 3,3',4,4'-biphenyltetracarboxylic dianhydride are dividedly added while attention is paid to an increase in the temperature of the solution, followed by stirring at room temperature for about 20 hours. Then, 7.11 g (0.048 mol) of phthalic anhydride is added, followed by stirring for 5 hours to obtain a polyamic acid (1).

### PREPARATION EXAMPLE 2

A polyamic acid (2) is obtained in the same manner as in Preparation Example 1 except that the amount of the pyromellitic dianhydride is changed to 10.25 g (0.047 mol), the amount of the 3,3',4,4'-biphenyltetracarboxylic dianhydride is changed to 13.83 g (0.047 mol) and the amount of phthalic anhydride is changed to 1.63 g (0.011 mol).

### PREPARATION EXAMPLE 3

To a container equipped with a stirrer, a reflux condenser and a nitrogen introduction tube, 38.44 g (0.1 mol) of 1,3-bis(3-aminophenoxy)benzene is put, and in a nitrogen atmosphere, 29.00 g (0.09 mol) of 2,2',3,3'-benzophenoneditetracarboxylic dianhydride is dividedly added while attention is paid to an increase in the temperature of the solution, followed by stirring at room temperature for 20 hours to obtain a polyamic acid (3).

### PREPARATION EXAMPLE 4

The polyamic acid (1) obtained in the above Preparation Example 1 is reacted at 200°C for 3 hours and then cooled to room temperature. 225 g of methyl ethyl ketone is added, followed by filtration to obtain a polyimide (1) .

### EXAMPLE 1

### (1) Flexural strength of sealed portion

An organic sealant solution containing the polyamic acid (1) in cresol at a concentration of 15 mass% is applied to a sealing end surface of a funnel portion of a vacuum envelope for a 25 inch CRT and dried at 200°C for 1 hour, and then an image display portion is set, followed by firing at 375°C for 60 minutes to obtain a sealed portion. After firing, the sealed portion is cut to prepare a sample with a width of 5 mm and a length of 60 mm, and a four-point flexural strength test is carried out at 220°C by a method in accordance with JIS R1601. The result is shown in Table 1.

### (2) Flexural modulus of sealing material

The polyamic acid (1) is dried at 200°C for 1 hour and then fired at 375°C for 60 minutes to obtain an organic sealant film (thickness: 0.1 mm). The modulus of the obtained film at 220°C is measured by means of a dynamic mechanical spectrometer (DMS) (DMS110 manufactured by Seiko Instruments Inc.). The result is shown in Table 1.

### (3) Mass ratio when heated at 400°C

A certain amount of the polyamic acid (1) is sampled in a cell (TG-DTA6200 manufactured by Seiko Instruments Inc.) for measurement by thermogravimetric differential thermal analysis (TG-DTA), and dried in the cell at 200°C for 1 hour, and then fired at 375°C for 60 minutes. After cooling to room temperature, TG measurement is carried out under conditions where the temperature is increased from room temperature to 550°C at 10°C/min. The value (m₄₀₀/m₂₀) obtained by dividing the mass m₄₀₀ at 400°C by the mass m₂₀ at room temperature (20°C) is regarded as the mass ratio when heated at 400°C. The result is shown in Table 1.

### (4) Minimum viscosity within a temperature range of at least 300°C and lower than 400°C

The polyamic acid (1) is dried at 200°C for 1 hour and then fired at 375°C for 60 minutes. After it is cooled to room temperature, it is processed into a predetermined dimension, and the minimum viscosity within a temperature range of at least 300°C and lower than 400°C is measured by a parallel plate method. The result is shown in Table 1.

### (5) Dielectric breakdown strength

The organic sealant solution of (1) is applied to a glass piece (60 mm × 30 mm × 5 mm) cut out from a funnel portion of a vacuum envelope for a 25 inch CRT and dried at 200°C for 1 hour, and then a glass piece (60 mm × 30 mm × 5 mm) cut out from a glass panel portion is disposed thereon, followed by firing at 375°C for 60 minutes. A direct current voltage is applied to both ends of the sealed portion of a sample piece after firing, and the pressure is increased, and the value obtained by dividing the voltage at breakage by the thickness of glass is shown in Table 1 as dielectric breakdown strength.

### (6) Hydraulic pressure resistance

A vacuum envelope for a 25 inch CRT is produced in the same procedure as in (1), a difference in pressure by water is continuously applied to the inside and outside of the vacuum envelope, and the difference in pressure when the vacuum envelope is broken is measured. When the vacuum envelope is broken at the sealed portion, the value is regarded as the hydraulic pressure resistance, and the result is shown in Table 1.

### (7) Display characteristics

A 25 inch CRT having a structure shown in Fig. 1 is produced in the same procedure as in (1), and image display characteristics are visually evaluated. The result is shown in Table 1. Symbols shown in Table 1 have the following meanings:
○: No problem in display characteristics
Δ: Some problems in display characteristics
×: Problems in display characteristics

### (8) Method of measuring glass transition temperature

The polyamic acid (1) is dried at 200°C for 1 hour and then fired at 375°C for 60 minutes. A certain amount of the obtained polyamic acid (1) is sampled in a cell of a differential scanning calorimeter (DSC) (DSC6200 manufactured by Seiko Instruments Inc.), and measurement is carried out under conditions where the temperature is increased from room temperature to 450°C at 8 °C/min in the cell. An endothermic peak is read from the obtained DSC curve and represented as Tg.

### EXAMPLES 2 to 4

The above tests (1) to (7) are carried out in the same manner as in Example 1 except that the polyamic acid (2), the polyamic acid (3) or the polyimide (1) is used instead of the polyamic acid (1). The results are shown in Table 1.

### COMPARATIVE EXAMPLES 1 to 4

The tests (1) to (7) in the same manner as in Example 1 are carried out using sealing materials under firing conditions as shown in Table 2. The results are shown in Table 2. The sealing materials used in Comparative Examples 1 to 4 are as follows.

Epoxy resin: STRUCTBOND EH-454 (manufactured by Mitsui Chemicals, Inc.)

Polyamic acid (4): LARK-TPI (manufactured by Mitsui Chemicals, Inc.)

Polybenzimidazole: PBI MR Solution (manufactured by HOECHST INDUSTRY K.K.)

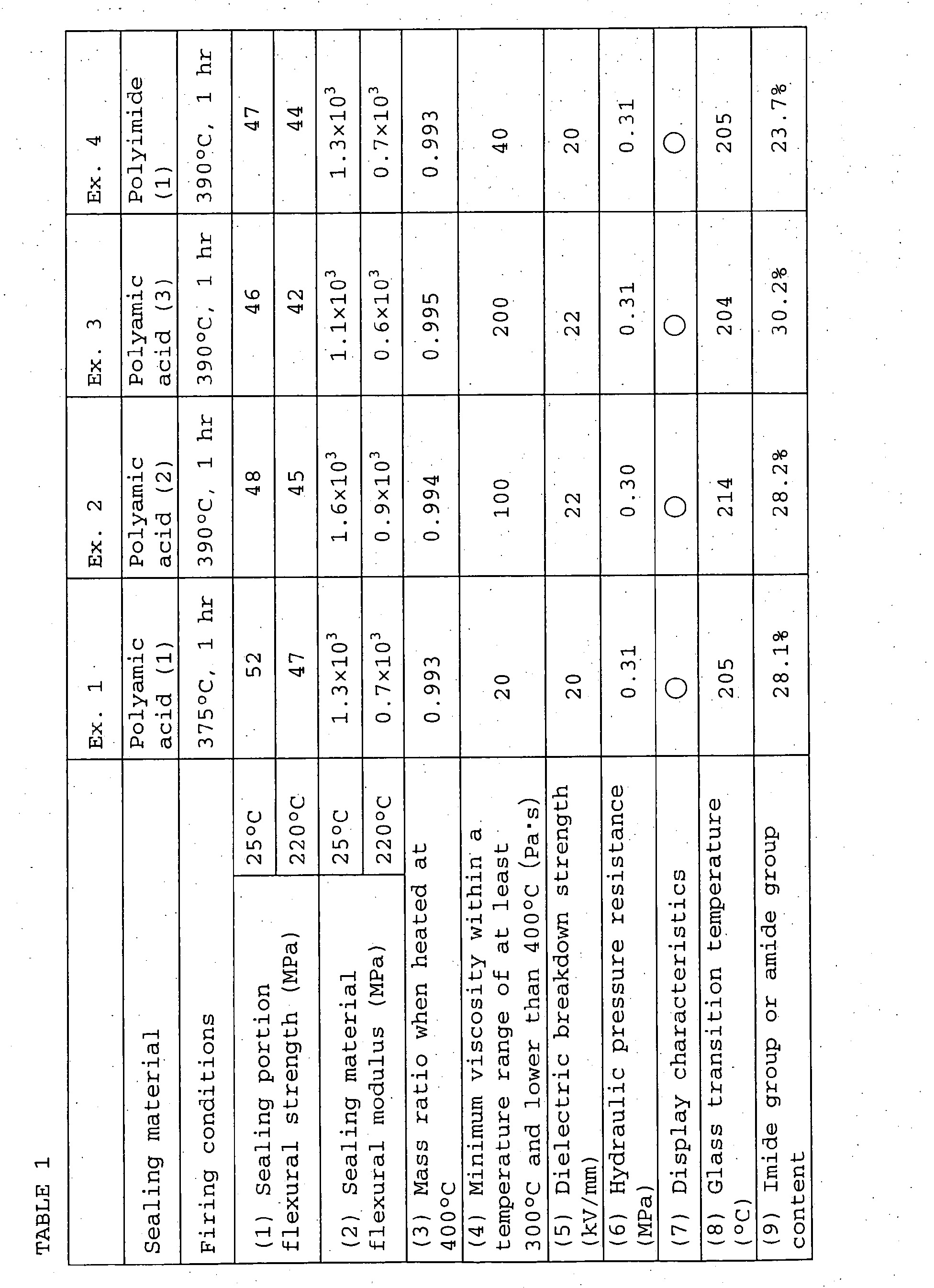

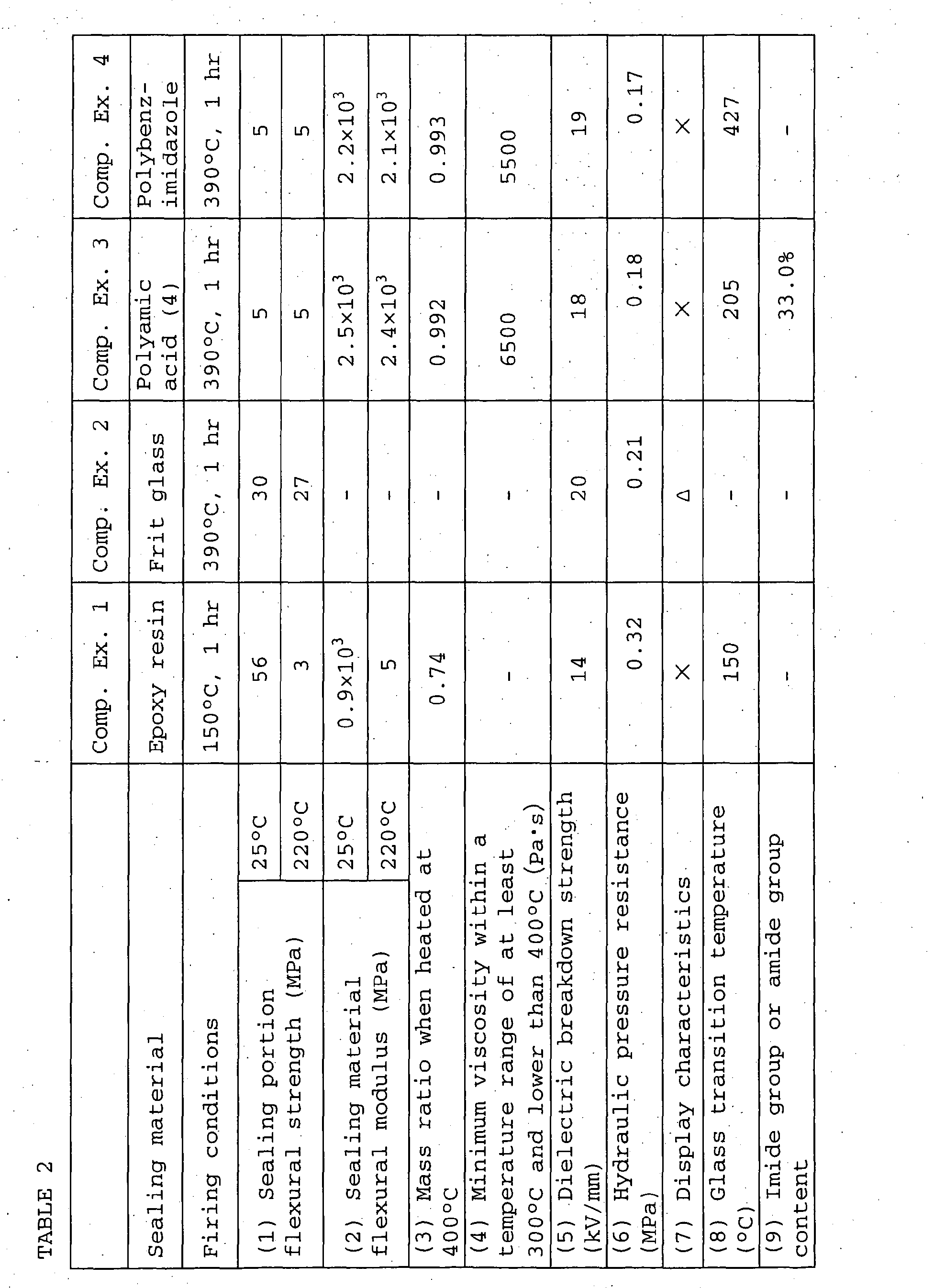

As evident from Table 1, the vacuum envelope for a CRT sealed at a temperature of lower than 400°C by using the organic sealant of the present invention, the fired product of which has a flexural strength of at lest 30 MPa at 220°C, is excellent in hydraulic pressure resistance. Further, a CRT employing such a vacuum envelope is excellent in display characteristics. On the contrary, the vacuum envelope sealed at a temperature of lower than 400°C by using a conventional frit glass has a low flexural strength at a sealed portion at 220°C, and may be broken in a high temperature evacuation step. Further, the vacuum envelope also has remarkably low hydraulic pressure resistance and is not practical. In general, the hydraulic pressure resistance of a vacuum envelope is required to be at least 0.25 MPa, and is preferably at least 0.3 MPa. Further, a vacuum envelope sealed by using an organic sealant, the fired body of which has a flexural strength less than 30 MPa at 220°C, has insufficient flexural strength at a sealed portion in a high temperature evacuation step, and the sealed portion may be broken. Further, in Comparative Example 1 wherein an epoxy resin is used as the sealing material, the mass ratio when heated at 400°C is very low, and it is confirmed that a considerable amount of the sealant decomposes in the high temperature evacuation step. Further, image display devices of Comparative Examples 1 to 4 have problems in their display characteristics. Further, the vacuum envelopes of Comparative Examples 3 and 4 have remarkably low hydraulic pressure resistance and are not practical.

### INDUSTRIAL APPLICABILITY

The present invention is useful for an image display device to be used for a television-broadcasting receiver, a monitor equipment, etc. in a screen picture equipment, specifically a cathode ray tube and an image display device having a field emission cold cathode, a vacuum envelope for an image display device and an organic sealant to be used for their production, and a method for sealing a vacuum envelope for an image display device using such an organic sealant.

## Claims

1. A vacuum envelope for an image display device, having envelope-constituting members including at least an image display portion made of glass, sealed with a sealant layer, **characterized in that** the sealant layer comprises an organic sealant layer obtained by firing an organic sealant, and a sealed portion comprising the organic sealant layer and the envelope-constituting members sealed with the organic sealant layer, has a flexural strength of at least 30 MPa at 220°C.

2. The vacuum envelope for an image display device according to Claim 1, **characterized in that** the sealed portion has a dielectric breakdown strength of at least 3 kV/mm.

3. The vacuum envelope for an image display device according to Claim 1 or 2, wherein the image display device is a cathode ray tube, and the sealed portion has a dielectric breakdown strength of at least 15 kV/mm.

4. The vacuum envelope for an image display device according to any one of Claims 1 to 3, **characterized in that** the organic sealant layer contains substantially no lead.

5. An image display device provided with the vacuum envelope for an image display device as defined in any one of Claims 1 to 4.

6. A sealant for an image display device, which is an organic sealant to seal envelope-constituting members to constitute a vacuum envelope for an image display device, **characterized in that** the organic sealant has a minimum viscosity of at most 10³ Pa·s within a temperature range of at least 300°C and lower than 400°C, and a fired body of the organic sealant satisfies 0.99<m₄₀₀/m₂₀≦1.00, where m₂₀ is the mass at 20°C, and m₄₀₀ is the mass at 400°C.

7. The sealant for an image display device according to Claim 6, **characterized in that** the fired body of the organic sealant has a glass transition temperature of at least 175°C as measured by a differential scanning calorimeter (DSC).

8. The sealant for an image display device according to Claim 6 or 7, **characterized in that** the fired body of the organic sealant has a flexural modulus of at least 100 MPa at 220°C.

9. The sealant for an image display device according to any one of Claims 6 to 8, **characterized in that** it contains a polyimide compound or a polyamic acid compound as the main component.

10. The sealant for an image display device according to Claim 9, **characterized in that** the imide group content in the polyimide compound (molecular weight of imide groups/molecular weight of polyimide) or the amide group content in the polyamic acid compound (molecular weight of amide groups/molecular weight of polyamic acid) is within a range of from 10 to 31%.

11. The sealant for an image display device according to Claim 9 or 10, **characterized in that** it contains at least one of polyimide compounds having structures represented by the following Formulae 1 to 3, as the main component: 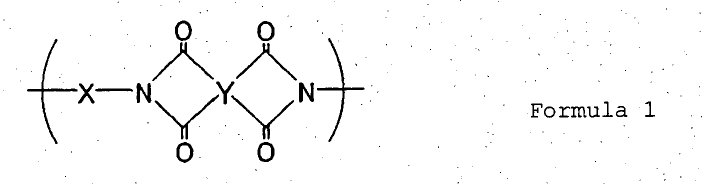 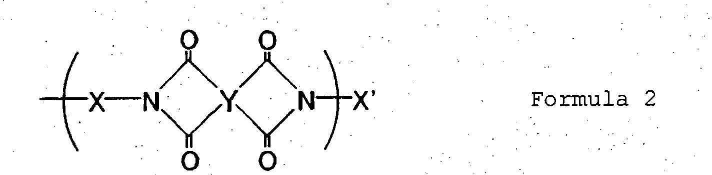 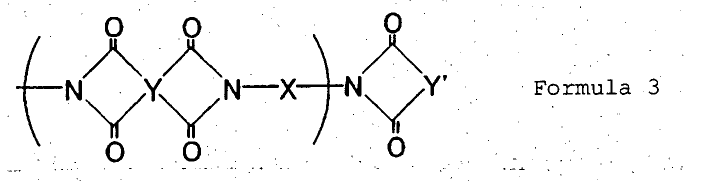 (wherein X is the main skeleton of a diamine compound, X' is the main skeleton of a monoamine compound, Y is the main skeleton of a tetracarboxylic dianhydride, and Y' is the main skeleton of a dicarboxylic anhydride).

12. The sealant for an image display device according to Claim 11, **characterized in that** in the polyimide compounds of the Formulae 1 to 3, when X is any one selected from the group consisting of the following Formulae 4 to 8, Y is any one selected from the group consisting of the following Formulae 9 to 14; when X is the following Formula 15, Y is the following Formula 16 or 17; and when X is the following Formula 18, Y is the following Formula 19: 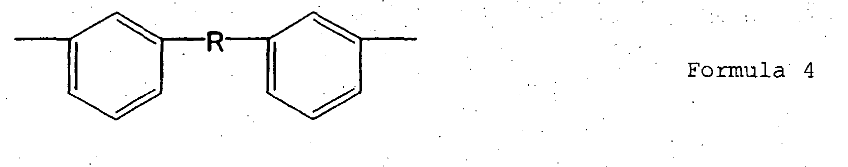 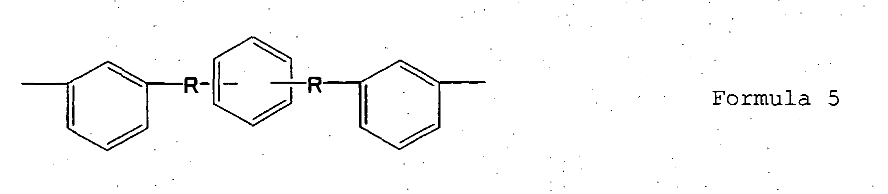 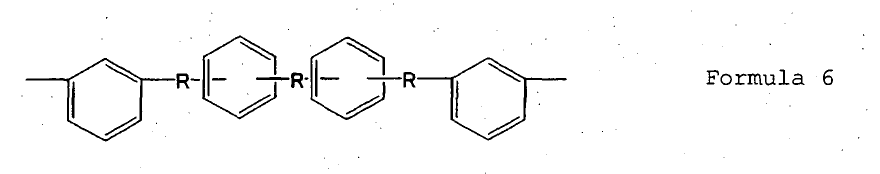 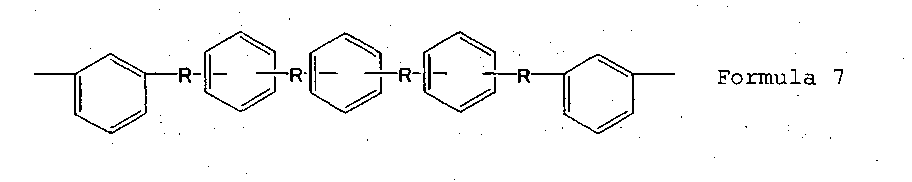 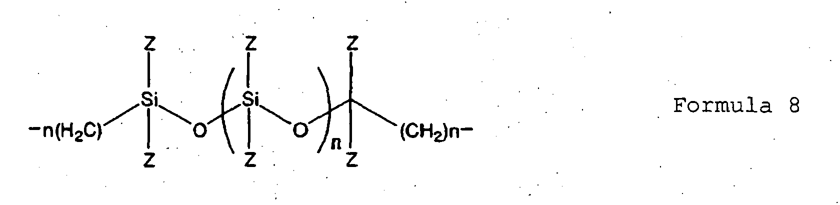 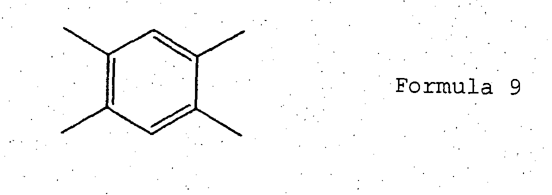 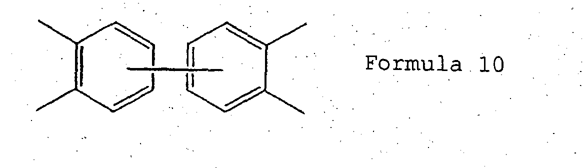 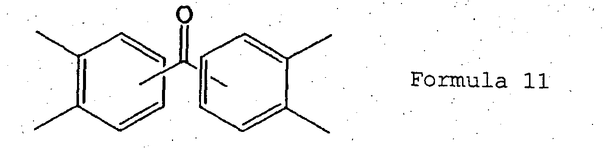 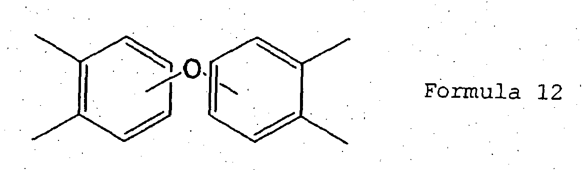 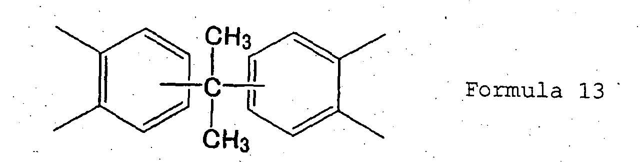 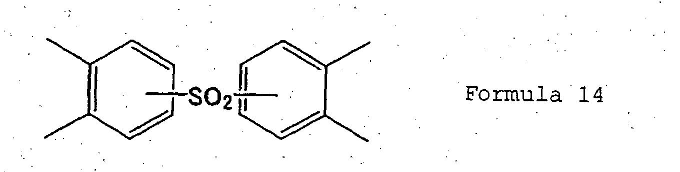 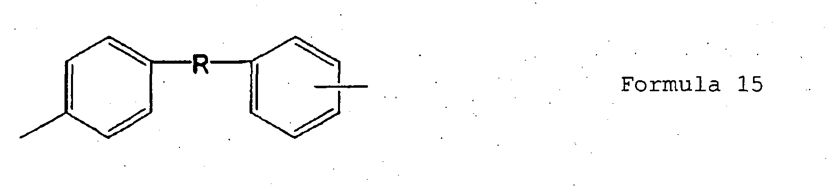 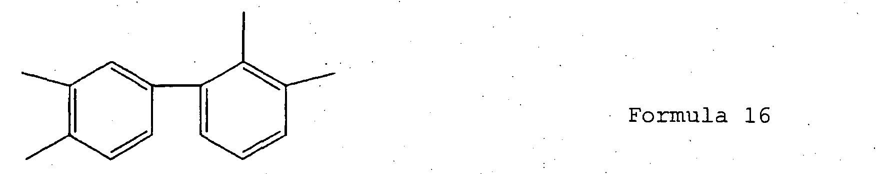 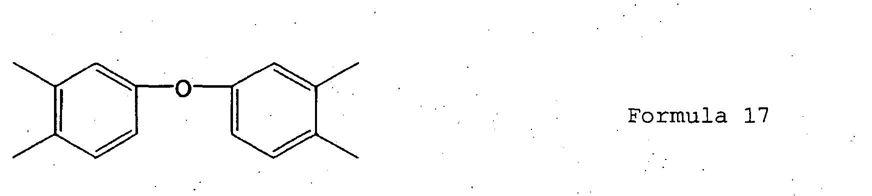 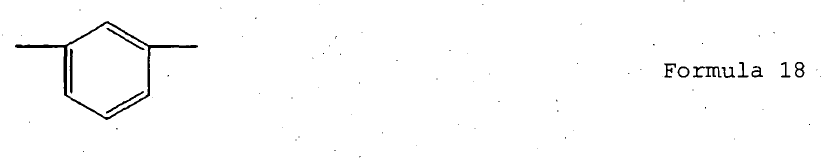 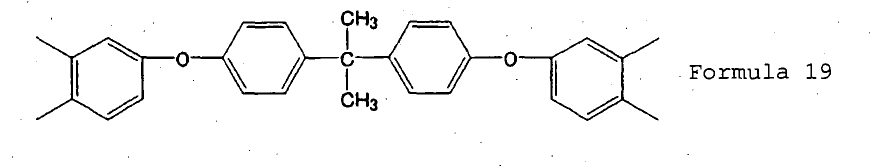 (in the above Formulae, R each independently is any one selected from the group consisting of -, -O-, -CO-, -SO₂-, -S-, -CH₂- and -C(CH₃)₂, n each independently is from 0 to 7, and Z each independently is CH₃ or a phenyl group).

13. The sealant for an image display device according to Claim 9 or 10, **characterized in that** it contains a polyamic acid compound having a structure represented by the following Formula 20, as the main component: 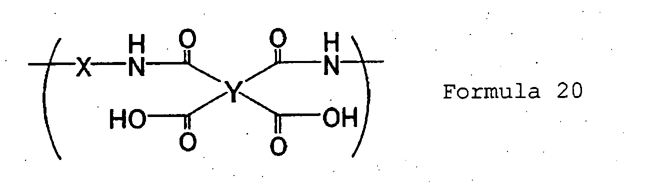 in the Formula 20, when X is any one selected from the group consisting of the following Formulae 4 to 8, Y is any one selected from the group consisting of the following Formulae 9 to 14; when X is the following Formula 15, Y is the following Formula 16 or 17; and when X is the following Formula 18, Y is the following Formula 19: 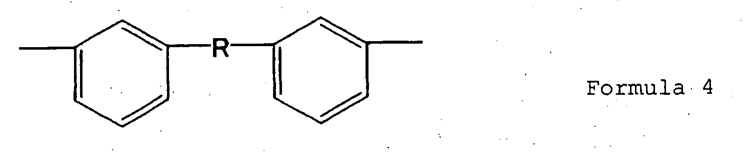 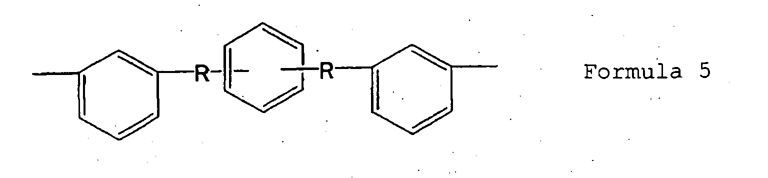 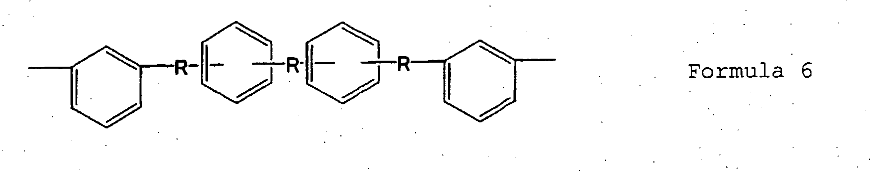 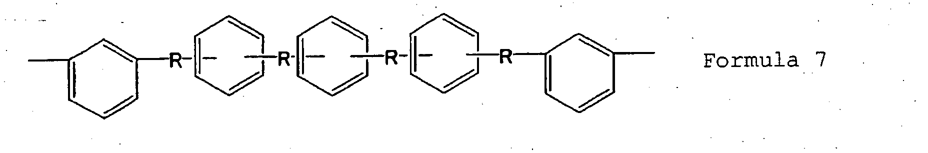 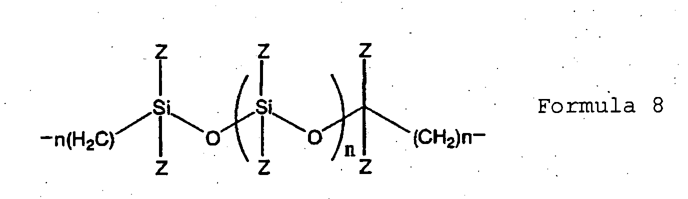 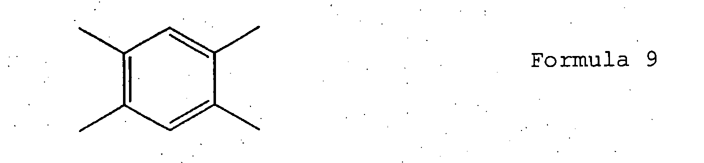 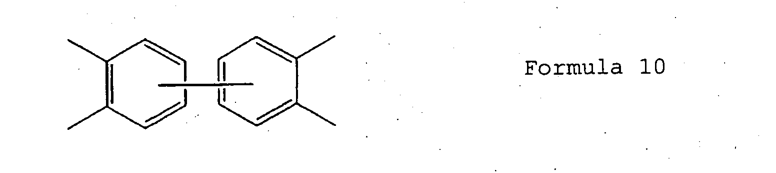 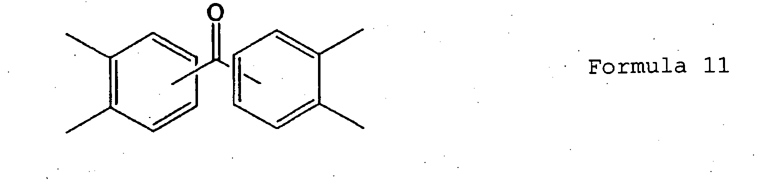 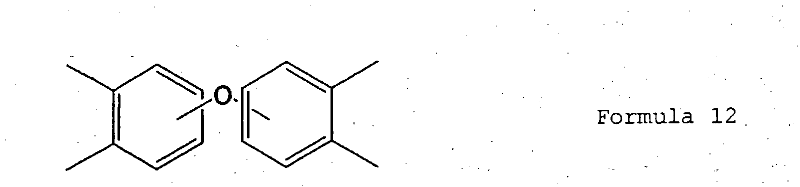 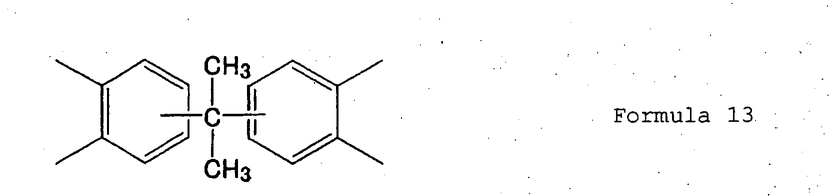 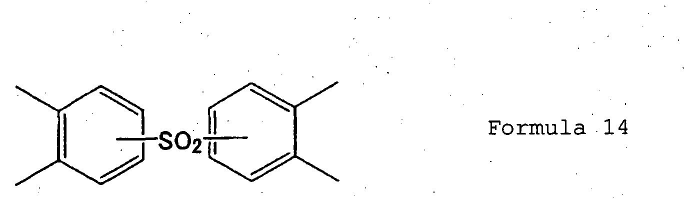 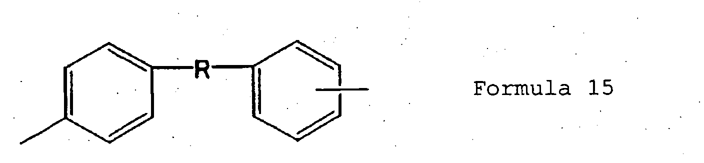 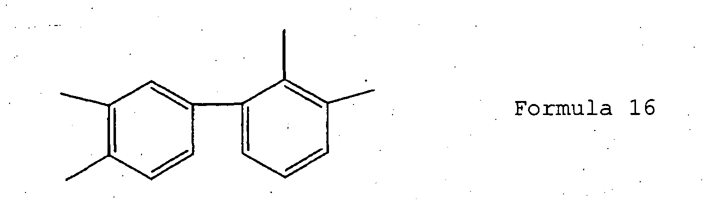 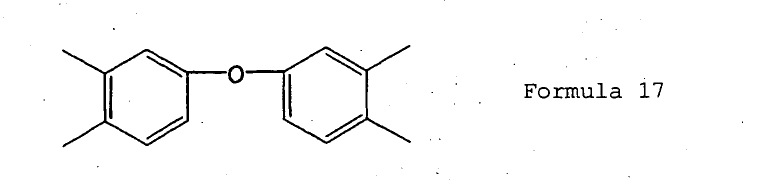 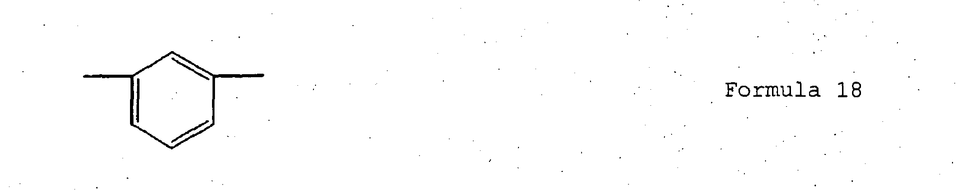 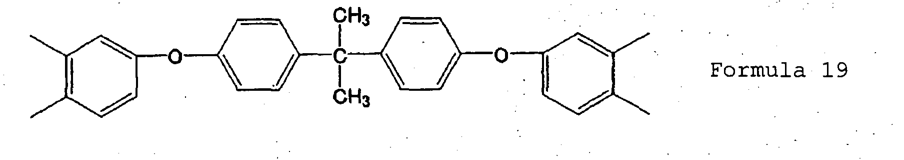 (in the above Formulae, R each independently is any one selected from the group consisting of -, -O-, -CO-, -SO₂-, -S-, -CH₂- and -C(CH₃)₂, n each independently is from 0 to 7, and Z each independently is CH₃ or a phenyl group).

14. A vacuum envelope for an image display device, **characterized in that** envelope-constituting members are sealed with the sealant for an image display device as defined in any one of Claims 6 to 13.

15. An image display device provided with the vacuum envelope for an image display device as defined in Claim 14.

16. A method for sealing a vacuum envelope for an image display device, **characterized by** applying an organic sealant containing a polyimide compound or a polyamic acid compound as the main component, or its solution; to sealing surfaces of envelope-constituting members to constitute the vacuum envelope, followed by heating at a temperature within a range of at least 300°C and lower than 400°C, to fire and solidify the organic sealant thereby to seal the envelope-constituting members.

17. The method for sealing an image display device according to Claim 16, **characterized in that** the organic sealant is the sealant for an image display device as defined in any one of Claims 10 to 13.
